# EUROPEAN PATENT SPECIFICATION

(11) **EP 3 789 116 B1**
(45) Date of publication and mention of the grant of the patent: **18.11.2026**
(21) Application number: 20199411.8
(22) Date of filing: 12.01.2015
(51) Int. Cl.: B01L 3/00, G01N 35/00, G06K 19/00, G06K 19/06, G09F 7/16

(54) **SAMPLE CONTAINERS WITH IDENTIFICATION MARK**
PROBENBEHÄLTER MIT KENNZEICHNUNG
CONTENANTS POUR ÉCHANTILLONS POURVUS D'UNE MARQUE D'IDENTIFICATION

(30) Priority: 14.01.2014 US 201461927395 P; 15.01.2014 US 201461927878 P
(43) Date of publication of application: 10.03.2021
(62) Document number(s) of the earlier application(s) in accordance with Art. 76 EPC: 15706073.2 / 3 094 406
(73) Proprietor: Labcyte Inc., San Jose, CA 95134 (US)
(72) Inventor: ELLSON, Richard N, Palo Alto, California 94306 (US); MAJLOF, Lars, Saratoga, California 95070 (US)
(74) Representative: Bevan, Emma

(56) References cited:
- WO-A1-92/04978
- WO-A2-2012/094114
- US-A1- 2003 048 341
- US-A1- 2008 014 123
- US-A1- 2009 007 676

## Description

### CROSS-REFERENCE TO RELATED APPLICATIONS

This application claims the benefit of U.S. Provisional Patent Application No. 61/927,395, filed on January 14, 2014.

This application also claims the benefit of U.S. Provisional Patent Application No. 61/927,878, filed on January 15, 2014.

### BACKGROUND OF THE INVENTION

The present invention is directed to sample handling. Examples of known containers used in sample handling can be seen in US 2008/014123; WO 92/04978; and WO 2012/094114. More particularly, certain embodiments of the present invention provide sample containers adapted for acoustic ejections and analyses and methods thereof as well as containing multiple reservoirs. Examples of containers for use with acoustic ejection methods are described in US 2009/007676, and US 2003/048341. Merely by way of example, the invention has been applied to a biological or chemical sample container wherein multiple fluid samples, which preferably but not necessarily are related to one another, may be stored such as different concentrations of the same chemical, different fractions of a patient blood sample (e.g., plasma, buffy coat, erythrocytes) in a manner compatible with both acoustic ejection and sample handling equipment for single sample storage and retrieval. But it would be recognized that the invention has a much broader range of applicability and could be applied to any collection of samples where the retrieval of a group of samples would speed throughput by reducing the number of container storage and retrieval operations, increase the density of sample storage or allow for a larger number of aliquots of the same sample to be preserved. Additionally, certain embodiments of the present invention provide sample containers adapted for acoustic ejections and analyses and methods thereof as well as compatibility with identification of the container. Merely by way of example, the invention has been applied to a biological sample container with an identification mark, such as a barcode, that is embedded within the container, that identifies the container, and that can be viewed from many different points around the container, with container with an identification mark, such as a barcode, that is embedded within the container, that identifies the container, and that can be viewed from many different points around the container, with each viewing resulting in identification of the container. But it would be recognized that the invention has a much broader range of applicability, such as storing a fluid sample, or any other item or material, within an identifiable container.

It is often desired to take a chemical or biological sample (e.g., a human blood sample) contained in an individual container and to transfer it to one or more well plates or other objects appropriate for carrying out reactions and assays such as in high-throughput screening for drug discovery or in clinical diagnostics in automated clinical chemistry analyzers. An important feature for the handling of samples includes the ability to transfer small volumes from the container to enable various types of diagnostics that can benefit from consistent deliveries of small-volume samples and to be able to repeatedly extract sample from the same container, preferably without potential for confusion of the identity of the sample container.

Acoustic ejection has been known for a number of years as a way of performing transfers of samples from containers, including microplates and microtubes. For example, in a typical setup for acoustic ejection, a piezoelectric transducer is driven by a waveform chosen by a controller and in response generates acoustic energy. The acoustic energy often is focused by an acoustic lens, and coupled to a reservoir or container containing fluid through an acoustic coupling medium (e.g., water). If the focused energy has a focal point inside a fluid in the container and close to a free surface of that fluid, a droplet may be ejected. Droplet size and velocity can be controlled by the chosen waveform as mentioned above.

In some embodiments, the transducer is movable in one or more directions (e.g., in the "z direction") that is roughly perpendicular to the free surface of the fluid. The movement can take place under the control of the controller. Some acoustic instruments for high-throughput use rely on an active control of the transducer position relative to the container and address the multiplicity of reservoirs in microplates or to an individual tube or to a tube in a rack of tubes. Often, the adjustment of the transducer position involves sending a motion command to a motion controller which then initiates movement in one or more directions (e.g., along one or more axes). For example, motion in the horizontal plane (e.g., in the "x direction" and/or in the "y direction") aligns the transducer with the selected reservoir, and motion in the vertical direction (e.g., in the "z direction") is used both to audit the reservoir and to focus for droplet transfer. In another example, positioning of the transducer to achieve the proper focus for droplet ejections can be responsive to data collected from an acoustic audit. Additionally, U.S. Patent Nos. 6,938,995 and 7,900,505 are incorporated by reference herein for all purposes. When the motion is complete, the controller can notify the system that the transducer and the selected reservoir are now in the proper position for the next step in the process. This may be further measurement of the fluid in the reservoir and/or acoustic ejection of droplets. When completed, the first reservoir is removed, and the acoustic coupling with a second reservoir may take place. Coupling fluid may remain attached to the first reservoir and would typically be at the surface facing the transducer.

Containers may include one or more fluid reservoirs. For example, a container may include one reservoir such as individual tubes, or may include a rack of separable tubes, or may include a microplate having non-separable wells. Individual tubes with one reservoir and microplates with multi-reservoirs are common, and the infrastructure for supporting the storage, retrieval and use of such tubes and plates is also common. Additionally, paper-based, adhesive labels having barcodes printed thereon are a common identifier for each of these containers and are well known in the art for both tube and microplate identification. Typically, for larger tubes, the barcode label is affixed to the outer surface of the cylindrical wall or to the bottom of the tube, whereas smaller tubes may not be labeled, but instead may be placed into a known location within a microplate or rack having a barcode label affixed thereto, e.g., applied to one or more of the exterior side surfaces. RFID tags have also been used, yet are not as common. In some cases, this is due to cost of tags and readers, and amongst others, it is the requirement to isolate a single item being read from its close neighbors.

As is known in the art, an advantage of a single tube is that the sample therein can be stored and retrieved independently of other samples, and an advantage of a microplate is that it can store and retrieve a large number (96, 385, 1536, 3456) of samples which can be small in volume (e.g., under 1 µL, for the highest density microplates). Additionally, as is known in the art, the specific region of the object having the barcode label affixed thereto must be presented to a barcode reader for proper identification to take place. However, problems may arise if the carrier, a label, another object, or the orientation of the object occludes the reader from viewing all or a portion of the complete barcode label, marking, or other identifier.

### SUMMARY OF THE INVENTION

The present invention is directed to sample handling. More particularly, the present invention provide sample containers adapted for acoustic ejections and analyses and methods thereof as well as containing multiple reservoirs. Merely by way of example, the invention has been applied to a biological or chemical sample container wherein multiple fluid samples, which preferably but not necessarily are related to one another, may be stored such as different concentrations of the same chemical, different fractions of a patient blood sample (e.g., plasma, buffy coat, erythrocytes) in a manner compatible with both acoustic ejection and sample handling equipment for single sample storage and retrieval. But it would be recognized that the invention has a much broader range of applicability and could be applied to any collection of samples where the retrieval of a group of samples would speed throughput by reducing the number of container storage and retrieval operations, increase the density of sample storage or allow for a larger number of aliquots of the same sample to be preserved. Additionally, the present invention provide sample containers adapted for acoustic ejections and analyses and methods thereof as well as compatibility with identification of the container. Merely by way of example, the invention has been applied to a biological sample container with an identification mark, such as a barcode, that is embedded within the container, that identifies the container, and that can be viewed from many different points around the container, with each viewing resulting in identification of the container. But it would be recognized that the invention has a much broader range of applicability, such as storing a fluid sample, or any other item or material, within an identifiable container.

For example, there is a need for individual sample containers with the advantages of being both compatible with acoustic ejection systems that are amenable to miniaturization and can provide multiple reservoirs from a single retrieval. In particular, it would be desirable for the container to hold related materials that would be likely to be retrieved and used for a specific function, such as an assay of different samples from the same patient (e.g., different fractionations of blood or time-course samples) or various concentrations of the same compound for construction of dose response curves.

Accordingly the present invention provides an individual, generally cylindrical container that is configured to contain multiple different samples. The present invention provides a tubular container including a plurality of reservoirs defined therein,the container including a major axis, and each of the reservoirs extending along at least a portion of the container in a direction parallel to the major axis, and each of the reservoirs terminating at an opening and the container is adapted to hold a fluid within at least one of the reservoirs of the plurality of reservoirs, wherein a bottom surface of the at least one reservoir is configured to receive and transmit an acoustic wave to a focal point near a surface of the fluid for acoustic ejection of the fluid; and each reservoir comprises a bottom, and the bottom of at least one of the reservoirs comprises an acoustically distinguishable difference in thickness from the bottom of at least one other of the reservoirs. Optionally, the container may be combined with other containers, e.g., stored in association with other containers, e.g., stacked with other containers, for retrieval as a group. In one embodiment, one or more of these combinable cylindrical containers with multiple reservoirs could also be combined with at least one cylindrical container having only one reservoir.

As another example, there is a need for individual sample containers with the advantages of being both compatible with acoustic ejection systems that are amenable to miniaturization and can in combination significantly simplify identification. In particular, it would be desirable for an identification mark reader, e.g., a barcode reader, to view the container identification even when the container in the proximity of many other similar containers (e.g., is racked) with minimal or no need for handling (e.g., rotating) the container to properly orient the container relative to the reader. In particular, it would be desirable for the container to be identifiable based on a non-specific (or non-predetermined), and relatively, small portion of its external surface, and for such identification to be repeatable at any time in a plurality of retrieval, open, close, and store cycles.

Accordingly, an individual, generally cylindrical container may include identification information that is written directly onto the container's exterior or interior cylindrical surface, e.g., engraved or embedded directly into such surface. Such identification information may, for example, include both an identification code such as a one-dimensional or two-dimensional bar code, and error correction information such as check bits known in the art, within a plurality of sectors about the internal or external circumference of the container. The sectors may be, but need not necessarily be, contiguous with one another, e.g., may be separated from one another by one or more blank areas, or by one or more paper-based labels applied to the container, or both. Preferably, the identification information is located on a portion of the interior or exterior surface of the container such that the identification information substantially does not interfere with the use of acoustic waves to eject one or more droplets of a fluid within the container.

### BRIEF DESCRIPTION OF THE DRAWINGS

FIGS. 1A-1C are simplified diagrams showing sample containers having identification marks embedded therein, used in some embodiments of the present invention.
FIGS. 2A-2D are simplified diagrams showing sample containers having identification marks embedded therein together with an acoustic generator for acoustic ejection and/or analysis, which can be used in some embodiments of the present invention.
FIG. 3A illustrates steps in an exemplary method for preparing a sample container having an identification mark embedded therein, used in an embodiment of the present invention.
FIG. 3B is a simplified diagram of an exemplary system for embedding an identification mark within a sample container, used in an embodiment of the present invention.
FIGS. 4A-4C are simplified diagrams showing sample containers having identification marks embedded therein together with a reader for reading the identification marks, used in some embodiments of the present invention.
FIG. 5 is a simplified diagram showing multiple sample containers in a rack, used in an embodiment of the present invention.
FIGS. 6A-6B are simplified diagrams showing a single retrievable sample container of roughly cylindrical shape having more than one reservoir where the samples are isolated from each other, optionally including an acoustically distinguishable difference in thickness in the bottoms of reservoirs in the container, according to some embodiments of the present invention.
FIG. 7 is a simplified diagram showing a retrievable sample container of roughly cylindrical shape having more than one reservoir where the samples are isolated from each other, in conjunction with an acoustic ejection system, according to some embodiments of the present invention.
FIGS. 8A-8C illustrate exemplary configurations for storing sample containers with multiple reservoirs therein either singly or in combination with other containers, e.g., stacked with other containers, according to some embodiments of the present invention.
FIG. 9A shows illustrates an exemplary rack for storing combinations, e.g., stacks of roughly cylindrical containers with multiple reservoirs therein for storage and retrieval, and FIG. 9B illustrates an exemplary rack for individually holding roughly cylindrical containers with multiple reservoirs therein for analysis or acoustic ejection, according to some embodiments of the present invention.
FIG. 10A-10B are simplified diagrams showing exemplary collections of multiple sample containers surface with their corresponding seals (or lids) stacked as a linked assembly with roughly cylindrical exterior for storage or retrieval with different concentrations in each well, according to some embodiments of the present invention.

### DETAILED DESCRIPTION

The present invention is directed to sample handling. More particularly, the present invention provides sample containers adapted for acoustic ejections and analyses and methods thereof as well as containing multiple reservoirs. Merely by way of example, the invention has been applied to a biological or chemical sample container wherein multiple fluid samples, which preferably but not necessarily are related to one another, may be stored such as different concentrations of the same chemical, different fractions of a patient blood sample (e.g., plasma, buffy coat, erythrocytes) in a manner compatible with both acoustic ejection and sample handling equipment for single sample storage and retrieval. But it would be recognized that the invention has a much broader range of applicability and could be applied to any collection of samples where the retrieval of a group of samples would speed throughput by reducing the number of container storage and retrieval operations, increase the density of sample storage or allow for a larger number of aliquots of the same sample to be preserved. Additionally, certain embodiments of the present invention provide sample containers adapted for acoustic ejections and analyses and methods thereof as well as compatibility with identification of the container. Merely by way of example, the invention has been applied to a biological sample container with an identification mark, such as a barcode, that is embedded within the container, that identifies the container, and that can be viewed from many different points around the container, with each viewing resulting in identification of the container. But it would be recognized that the invention has a much broader range of applicability, such as storing a fluid sample, or any other item or material, within an identifiable container.

With respect to various embodiments of the present invention, it is to be understood that this invention is not limited to specific solvents, materials, and/or device structures, as such may vary. It is also to be understood that the terminology used herein is for the purpose of describing particular embodiments only, and is not intended to be limiting.

According to some embodiments, the singular forms "a," "an," and "the" include both singular and plural referents unless the context clearly dictates otherwise. For example, reference to "a fluid" includes a plurality of fluids as well as a single fluid. In another example, reference to "a temperature" includes a plurality of temperatures as well as a single temperature.

According to certain embodiments, where a range of values is provided, it is intended that each intervening value between the upper limit and the lower limit of that range and any other stated or intervening value in that stated range is encompassed within the disclosure. For example, if a range of 1 µm to 8 µm is stated, it is intended that at least 2 µm, 3 µm, 4 µm, 5 µm, 6 µm, and 7 µm are also disclosed, as well as the range of values that are greater than or equal to 1 µm and less than or equal to 8 µm.

According to some embodiments, reference is sometimes made to "horizontal" or "vertical" in terms of acoustic ejection configuration where a fluid is in a sample container and has a free surface which is approximately horizontal (e.g., approximately perpendicular to the direction of the earth's gravity).

As discussed above, there is a need for sample containers that can simplify the full life cycle of processing biological samples (e.g., collecting, transferring, preserving, and/or analyzing biological samples) by using acoustic ejection and/or acoustic analysis, and that may include relatively durable identification marks.

For example, conventional collection containers (e.g., containers used in extraction and/or storage of samples) may include conventional identification marks, but usually are not adapted for use in acoustic transfer. Often, these conventional containers are tubular in geometry and have rounded bottoms to facilitate complete transfer out of the tube by pipettes. Curved container surfaces can alter the acoustic beam and pose additional challenges to aligning the beam with the container, analyzing the fluid in the container, and focusing the beam at the sample surface to enable acoustic ejection. Also, the conventional containers usually are not labeled in such a manner that is compatible with uniform propagation of the acoustic beam towards a free surface of the sample such that a droplet can be ejected out of the container. For example, certain conventional containers are roughly cylindrical tubes that have been molded in such a manner as to having a small nub or molding artifact directly opposite their open tops in the middle of the tube bottoms (e.g., where the plastic entered the mold during the manufacturing process). Such small nub or molding artifact can disrupt uniformity of sound entering at this location. In another example, some conventional tubes, in addition to having curved exterior walls, have exterior labels that are made of paper consisting of fibers that can scatter sound, or have adhesive layers containing air gaps that can disrupt uniform transfer of acoustic energy.

As described herein, embedding an identification mark within a container adapted for acoustic ejections may provide significant advantages relative to providing the identification mark on a paper label that subsequently is applied to a container. First, an embedded identification mark may be significantly more durable than may be a paper label. For example, conventional labels may include a sheet of paper upon which an identification mark may be printed, and may be affixed to the container using an adhesive. Such labels may be susceptible to degradation of the paper, or of the identification mark, and/or of the adhesive, particularly when the container is handled multiple times in a wet environment. In comparison, the present embedded identification marks may, for example, be formed by defining a plurality of grooves that in turn define the identification mark, e.g., by removing small amounts of material from the container or by otherwise introducing machine-readable changes in the texture of the container's surface in accordance with a geometrical pattern. Such grooves may be formed using any suitable method, including but not limited to laser scribing, chemical etching, discoloring the surface such as with heating, burning, or radiation, or transferring adherent materials which may have the same color as the container or may have one or more different colors than the container. As such, the embedded identification marks may be contiguous and unitary with the container, may have approximately the same mechanical, thermal, and optical properties as the container, and may be substantially unaffected by exposure to a fluid.

Moreover, the present embedded identification marks may be formed so as to have any desired area, and any desired feature size, that suitably may be provided using technologies available at the time of formation. For example, the identification marks may be formed using laser scribing, which presently may form features having sizes of 100 µm or less, e.g., 50 µm or less, or 25 µm or less, or 10 µm or less, or 5 µm or less, or 1 µm or less. Accordingly, the identification marks may have at least one lateral dimension that is 1 mm or less, or 500 µm or less, or 250 µm or less, or 100 µm or less, or 50 µm or less, or 10 µm or less. Features and labels of such sizes readily may be embedded within a sidewall and may be machine readable. In comparison, conventional labels may be manually applied to the exterior surfaces of containers and may be intended to be readable by humans, and accordingly may have feature sizes that are 1 mm or larger, or 10 mm or larger, or 100 mm or larger, and may have lateral dimensions that are 1 cm or larger, or 10 cm or larger.

Additionally, the identification mark embedded within the container preferably may be compatible with acoustic analysis of a fluid that may be disposed inside of the container. For example, the identification mark preferably is configured so as not to disrupt the uniform or efficient transfer of acoustic energy, which may be in the low megahertz range, through a wall or bottom of the container, into the fluid, and to a free surface of the fluid from which droplets will emerge in acoustic ejection. As such, in some embodiments, the identification mark may be embedded within the container in a region that is spaced apart from a region in which the fluid may be disposed and/or in which acoustic energy may be transmitted into and through the fluid. For example, in embodiments in which the sample container is oriented vertically and acoustic energy may be transmitted through the bottom of the container and into a fluid disposed within the bottom region of the container, the identification mark preferably is disposed within a region above the highest anticipated level of fluid within the container. Or, for example, in embodiments in which the sample container is oriented horizontally and acoustic energy may be transmitted through the side of the container and into a fluid disposed along the side of the container, the identification mark preferably is horizontally spaced apart from the region in which the acoustic energy is transmitted into the fluid. In comparison, applying a paper label to the region of the container at which acoustic energy is applied may lead to acoustic scattering from the presence of air gaps in the label or between the label and the container, scattering from paper fibers of the label, acoustic beam non-uniformity from surface texture of an identification mark printed on the label, absorption of acoustic energy by the materials of the label and identification mark (e.g., paper, plastics, or adhesives) and the like. Additionally, the presence of coupling fluid used in the acoustic analysis or ejection phase may also be present a problem with the reading method as the paper label may disrupt the read by occlusion, refraction, or reflection from the presence of coupling fluid on the markings; additionally, the coupling fluid may degrade the paper label, marking thereon, and/or adhesive used to affix the label to the container.

Accordingly, it may be appreciated that the present embedded identification marks may facilitate the reusability of sample containers multiple times in wet or otherwise harsh environments substantially without degradation of the identification marks, and may be compatible with acoustic ejection techniques and with machine reading of the identification marks. Preferably, the container with identification mark embedded therein may include one or more acoustic paths that are free of scattering and/or non-focusing objects (e.g., bubbles), and/or have low surface roughness and/or low attenuation.

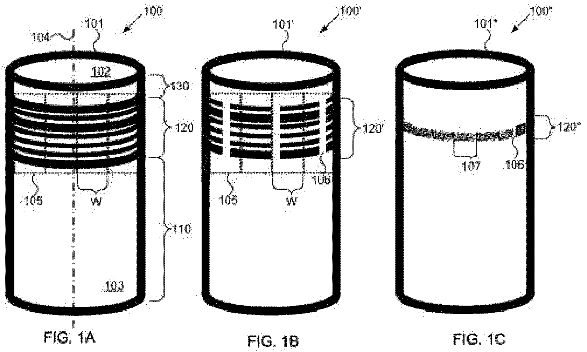

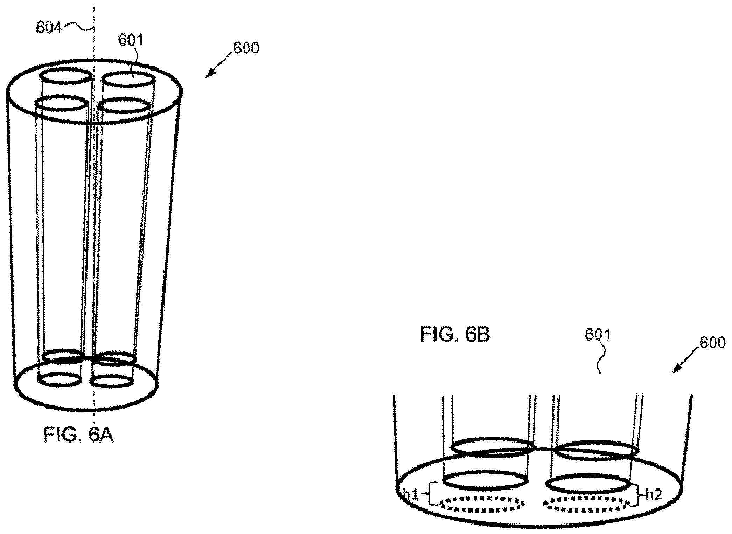

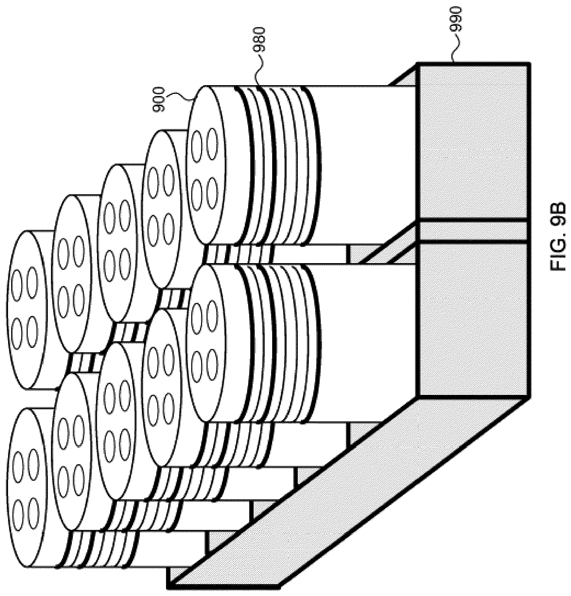

Additionally, it should be noted that any of the present identification marks, such as those described with reference to FIGS. 1A, IB, 1C, 2A, 2B, 2C, 2D, 3A, 3B, 4A, 4B, 4C, and 5, suitably can be, but need not necessarily be, used in conjunction with any of the present multi-reservoir containers, such as those described with reference to FIGS. 6A, 6B, 7, 8A, 8B, 8C, 9A, 9B, 10A, and 10B. Additionally, any of the present multi-reservoir containers, such as those described with reference to FIGS. 6A, 6B, 7, 8A, 8B, 8C, 9A, 9B, 10A, and 10B can be, but need not necessarily be, used in conjunction with any of the present identification marks, such as those described with reference to FIGS. 1A, IB, 1C, 2A, 2B, 2C, 2D, 3 A, 3B, 4A, 4B, 4C, and 5. FIG. 9B illustrates one exemplary embodiment in which the present identification marks are used in conjunction with multi-reservoir containers. However, any suitable combination of any of the embodiments provided herein can be used.

FIGS. 1A-1C are simplified diagrams showing sample containers having identification marks embedded therein, according to some embodiments of the present invention. These diagrams are merely examples, as are the other diagrams herein, which should not unduly limit the scope of the claims. One of ordinary skill in the art would recognize many variations, alternatives, and modifications.

FIG. 1A illustrates a first exemplary container 100 that includes tubular sidewall 101. Sidewall 101 defines interior surface 102 and exterior surface 103 of container 100. In the illustrated embodiment, sidewall 101 is generally cylindrical, e.g., has a cross section that is generally circular. However, it should be appreciated that sidewall 101 suitably may have other geometries, e.g., may have a cross-section that is generally triangular, or that is generally rectangular, or that is generally square, or that is generally pentagonal, or that is generally hexagonal, or that has any suitable number of sides, and indeed may have any regular or irregular shape. Additionally, the cross-section of sidewall 101 may vary along major axis 104. For example, sidewall 101 may be tapered, e.g., such that the cross-section at one end of sidewall 101 may be smaller or larger than the cross-section at the other end of sidewall 101. For example, if sidewall 101 is formed using a mold, then such a taper may facilitate removal of sidewall 101 from the mold.

In the embodiment illustrated in FIG. 1A, sidewall 101 includes first region 110, second region 120, and third region 130 which are disposed relative to one another along major axis 104 of sidewall 101. First region 110 of sidewall 101 defines a volume configured to receive a fluid, e.g., a fluid into which acoustic energy may be transmitted so as to eject a droplet of fluid. An identification mark, such as a barcode, is embedded within sidewall 101 in second region 120. For example, the identification mark may be embedded within a plurality of sectors 105 about sidewall 101 within second region 120, and may be embedded within one or both of the interior and exterior surfaces 102, 103 of container 100. Region 130, which is optional, may be configured to receive a cap. Although FIG. 1A illustrates the identification mark as being disposed only within second region 120, it should be appreciated that alternatively the identification mark may be disposed within any desired one or more of first region 110, second region 120, and third region 130. For example, the identification mark may be disposed within both first region 110 and second region 120, or within both second region 120 and third region 130, and so on. In an exemplary embodiment, container 100 has a height of 1 cm or less, region 110 has a height of 0.5 cm or less, and region 120 has a height of 0.5 cm or less. In another exemplary embodiment, container 100 has a height of 100 mm or less, region 110 has a height of 50 mm or less, and region 120 has a height of 50 mm or less. In yet another exemplary embodiment, container 100 has a height of 60 mm or less, region 110 has a height of 30 mm or less, and region 120 has a height of 30 mm or less. In still another exemplary embodiment, container 100 has a height of 20 mm or less, region 110 has a height of 10 mm or less, and region 120 has a height of 10 mm or less. In still another exemplary embodiment, container 100 has a height of 1 mm or less, region 110 has a height of 500 µm or less, and region 120 has a height of 500 µm or less. It should be apparent that the present identification marks are compatible with larger or smaller sizes of containers 100, regions 110, and regions 120.

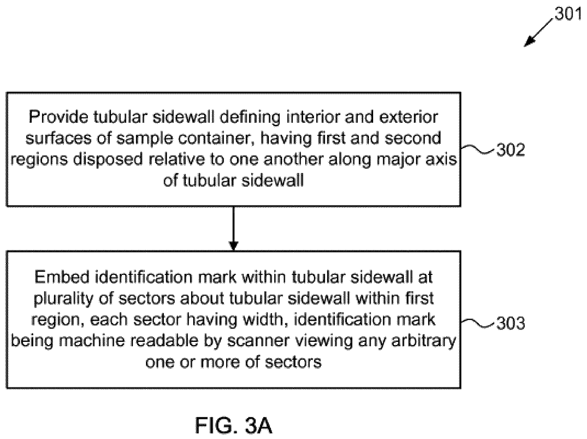

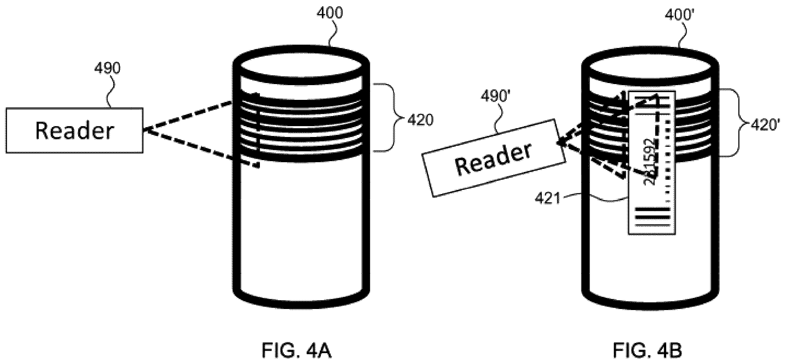

Preferably, the identification mark is located in a region that is visible to a reader and that substantially does not interfere with transmission of acoustic energy into and through a fluid that may be disposed within container 100. For example, as described in greater detail below with reference to FIGS. 4A-4C, the embedded identification mark preferably is machine readable by a reader viewing any arbitrary one or more of sectors 105 of second region 120 illustrated in FIG. 1A. For example, each of sectors 105 may have a width W that is between about 1% and about 50% of a circumference of the interior or exterior surface 102, 103 in which the identification mark is embedded, e.g., between about 5% and about 33%, or between about 5% and about 20%, or between about 5% and about 10%, e.g., about 10% or less of a circumference of the interior or exterior surface 102, 103 in which the identification mark is embedded. As described in greater detail below with reference to FIGS. 3A-3B, the identification marks may be formed using laser scribing, and as described below with reference to FIGS. 4A-4C, may be read using a laser reader. For example, the identification marks may include features having sizes of 100 µm or less, e.g., 50 µm or less, or 25 µm or less, or 10 µm or less, or 5 µm or less, or 1 µm or less, and may have at least one lateral dimension that is 1 mm or less, or 500 µm or less, or 250 µm or less, or 100 µm or less, or 50 µm or less, or 10 µm or less.

In the embodiment illustrated in FIG. 1 A, the embedded identification mark includes a machine -readable change in a texture of the tubular sidewall 101 in accordance with a geometrical pattern, such as but not limited to a plurality of grooves defined in sidewall 101 within second region 120. As described in greater detail below with reference to FIGS. 3A-3B, the change in texture, e.g., grooves may be removing small amounts of material from the container or by otherwise introducing machine -readable changes in the texture of the container's surface in accordance with a geometrical pattern, e.g., using laser scribing, chemical etching, discoloring the surface such as with heating, burning, or radiation, or transferring adherent materials which may have the same color as the container or may have one or more different colors than the container.

As illustrated in FIG. 1A, the change in texture, e.g., grooves, may in some embodiments define a barcode, e.g., a one-dimensional barcode in which the grooves extend substantially perpendicularly to major axis 104 of sidewall 101. The change in texture, e.g., grooves may be substantially contiguous about sidewall 101, e.g., a plurality of sectors 105 may be contiguous with one another. Alternatively, the embedded identification mark may have one or more discontinuities. For example, FIG. IB illustrates an alternative container 100' having a modified sidewall 101', in which the identification mark within modified region 120' includes a one-dimensional barcode analogous to that illustrated in FIG. 1A, but in which the change in texture, e.g., grooves, defining the barcode include one or more discontinuities 106 about sidewall 101. In some embodiments, discontinuities 106 have a width that is about 40% or less of the circumference of the surface in which the identification mark is embedded, e.g., about 20% or less of the circumference of the surface in which the identification mark is embedded, e.g., about 10% or less of the circumference of the surface in which the identification mark is embedded, e.g., about 5% or less of the circumference of the surface in which the identification mark is embedded, e.g., about 2% or less of the circumference of the surface in which the identification mark is embedded, e.g., about 1% or less of the circumference of the surface in which the identification mark is embedded. As described in greater detail with reference to FIG. 4B, such discontinuities 106 may include paper labels applied to the container, e.g., paper, human readable labels affixed to the outer surface of the container. Preferably, even if such a label or other discontinuity 106 partially or fully obscures one or more of sectors 105, the identification code in unobscured sectors 105 or portions thereof is machine readable by viewing any arbitrary one or more of such other, unobscured sectors 105 or portions thereof.

It should be apparent to those skilled in the art that the present embedded identification marks suitably may include any pattern or identification code presently known or yet to be developed. In one illustrative example, FIG. 1C illustrates another alternative container 100" having a modified sidewall 101", in which the identification mark within modified region 120" includes a two-dimensional barcode 107 that is repeated around substantially the entire circumference of the container, and one or more optional interruptions 106. In some embodiments, two-dimensional barcodes 107 have a width that is about 20% or less of the circumference of the surface in which the identification mark is embedded, e.g., about 10% or less of the circumference of the surface in which the identification mark is embedded, e.g., about 5% or less of the circumference of the surface in which the identification mark is embedded, e.g., about 2% or less of the circumference of the surface in which the identification mark is embedded, e.g., about 1% or less of the circumference of the surface in which the identification mark is embedded.

In preferred embodiments, the present embedded identification marks include any suitable geometric pattern, e.g., any suitable combination of symbols, dots, lines, spaces, curves, or other suitable patterns known in the art or yet to be developed. Such a geometric pattern suitably may be defined using a change in texture, e.g., a plurality of grooves that are defined in the inner surface of the sample container, the outer surface of the sample container, or both. In one illustrative example, the identification mark may include a change in texture, e.g., grooves, that have one or more characteristic that varies based on their radial position about the container, as a way of carrying information, such as color, width, depth, duty cycle, e.g., different kinds of dashed lines within a sector.

Examples of one-dimensional barcodes upon which the present identification marks suitably may be based include one or more of the following: Codabar, Code-25 (e.g., Interleaved 2 of 5 or Non-Interleaved 2 of 5), Code 11, Code 39, Code 93, Code 128, CPC binary, DUN 14, GS1-128, GS1 DataBar, Health Industry Bar Code (HIBC), ITF-14, JAN, MSI, Pharmacode, Plessey, and Universal Product Code (UPC, e.g., UPC-A, UPC-B, UPC-C, UPC-D, or UPC-E), among others. Examples of two-dimensional barcodes upon which the present identification marks suitably may be based include one or more of the following: 3-DI, ArrayTag, AugTag, Aztec code, Small Aztec Code, Codablock, Code 1, Code 16K, Code 49, Compact Matrix Code, CP Code, CyberCode, DataGlyphs, Data Matrix, Datastrip Code, Dot Code A, EZcode, Grid Matrix Code, HD Barcode, HueCode, INTACTA.CODE, Intercode, JAGTAG, MaxiCode, mCode, MiniCode, MicroPDF417, NexCode, Optar, PaperDisk, PDF417, PDMark, QR Code, QuickMark Code, SmartCode, Snowflake Code, ShotCode, SPARQCode, SuperCode, Trillcode, UltraCode, VeriCode, VSCode, and WaterCode, among others. Preferably, but not necessarily, the one-dimensional or two-dimensional barcode(s) selected for use in the present embedded identification marks include an error code, e.g., one or more check bits that facilitate a reader's confirmation that the identification mark was properly read. It should also be appreciated that identification marks other than barcodes suitably may be used, e.g., machine readable numbers, letters, or symbols, or any other suitable geometric pattern. Exemplary systems for reading identification marks such as barcodes are known in the art, and described in greater detail below with reference to FIGS. 4A-4C.

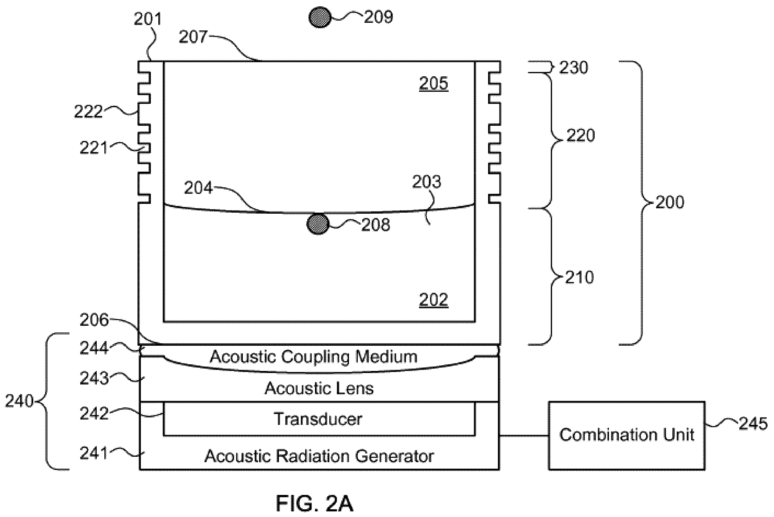

As noted above, the present embedded identification marks preferably are compatible with transmission of acoustic energy into and through a fluid that is disposed within the container. For example, FIGS. 2A-2D are simplified diagrams showing sample containers having identification marks embedded therein together with an acoustic generator for acoustic ejection and/or analysis, according to some embodiments of the present invention.

FIG. 2A illustrates an exemplary sample container 200 that is in a substantially vertical orientation and configured for use with acoustic generator 240. In the illustrated embodiment, sample container 200 includes tubular sidewall 201, which may be substantially cylindrical, and that includes a first region 230 defining a first volume 202 for receiving a fluid 203 having an upper surface 204, and second and third regions 220, 230 defining a second volume 205 for containing a gas disposed over upper surface 204. Third region 230 may be configured to receive a cap (not illustrated). An identification mark such as described herein is embedded within sidewall 201 within region 220, and preferably, but not necessarily, only within region 220. In the embodiment illustrated in FIG. 2A, the identification mark includes a change in texture, e.g., a plurality of grooves 221 defined within the exterior surface of container 200 so as to define a plurality of ridges 222 that are raised relative to grooves 221. Preferably, grooves 221 have a depth such that the identification mark defined by grooves 221 and ridges 222 is machine readable, and may have any suitable geometric pattern. For example, grooves 221 may have a depth on the order of 1 nm, or on the order of 10 nm, or on the order of 100 nm, or on the order of 1 mm.

In the embodiment illustrated in FIG. 2 A, container 200 is preferably axially symmetrical, e.g., cylindrical, having sidewall 201 extending upward from container base 206 and terminating at opening 207, although other container shapes may be used. The material and thickness of container base 206 preferably is configured such that acoustic radiation may be transmitted therethrough and into the fluid contained within container 200. Preferably, but not necessarily, container base 206 is substantially flat, is oriented substantially perpendicular to the major axis of sidewall 201, and is configured to receive an acoustic wave and to transmit the acoustic wave to fluid 203 disposed within region 210. For example, container 200 may be coupled to an acoustic ejector 240 that includes an acoustic radiation generator 241 for generating acoustic radiation and an acoustic lens 243 for focusing the acoustic radiation at a focal point within fluid 203 from which a droplet is to be ejected, near surface 204. The acoustic radiation generator contains a transducer 242, e.g., a piezoelectric element, commonly shared by an analyzer. As shown, a combination unit 245 is provided that both serves as a controller and a component of an analyzer. Operating as a controller, the combination unit 245 provides the piezoelectric element 242 with electrical energy that is converted into mechanical and acoustic energy. Operating as a component of an analyzer, the combination unit receives and analyzes electrical signals from the transducer. The electrical signals are produced as a result of the absorption and conversion of mechanical and acoustic energy by the transducer.

As shown in FIG. 2A, acoustic lens 243 may include a single solid piece having a concave surface for focusing acoustic radiation, but the lens may be constructed in other ways such as known in the art. Acoustic ejector 240 is thus adapted to generate and focus acoustic radiation so as to eject a droplet of fluid from surface 204 when acoustically coupled to container 200, and thus to fluid 203. Acoustic radiation generator 241 and lens 243 may function as a single unit controlled by a single controller, or they may be independently controlled, depending on the desired performance of the device. Typically, single ejector designs are preferred over multiple ejector designs because accuracy of droplet placement and consistency in droplet size and velocity are more easily achieved with a single ejector.

There are also a number of ways to acoustically couple the ejector 240 to each individual reservoir and thus to the fluid therein. One such approach is through direct contact as is described, for example, in U.S. Pat. No. 4,308,547 to Lovelady et al, wherein a lens constructed from a hemispherical crystal having segmented electrodes is submerged in a fluid to be ejected. The aforementioned patent further discloses that the lens may be positioned at or below the surface of the fluid. However, this approach for acoustically coupling the lens to a fluid is undesirable when the ejector is used to eject different fluids in a plurality of containers or reservoirs, as repeated cleaning of the lens would be required in order to avoid cross-contamination. The cleaning process would necessarily lengthen the transition time between each droplet ejection event. In addition, in such a method, fluid would adhere to the ejector as it is removed from each container, wasting material that may be costly or rare.

Thus, one exemplary approach would be to acoustically couple the ejector to the container without contacting any portion of the ejector, e.g., lens 243, with any of the fluids to be ejected. To this end, ejector 240 suitably may be positioned in controlled and repeatable acoustic coupling with container 200 to eject droplets therefrom without submerging the ejector therein. This typically involves direct or indirect contact between the ejector and the external surface of the container, e.g., bottom surface 206. When direct contact (not illustrated) is used in order to acoustically couple ejector 240 to container 200, it is preferred that the direct contact is wholly conformal to ensure efficient acoustic energy transfer. That is, ejector 240 and the bottom surface 206 of container 200 should have corresponding surfaces adapted for mating contact. Thus, if acoustic coupling is achieved between ejector 240 and container 200 through acoustic lens 243, it is desirable that the surface profile of bottom surface 206 suitably corresponds to the surface profile of the lens (not illustrated in the embodiment of FIG. 2A).

Alternatively, acoustic coupling may be achieved between the ejector and each of the containers through indirect contact, such as illustrated in FIG. 2A. For example, acoustic coupling medium 244 may be placed between ejector 240 and base 206 of container 200, with the ejector and container located at a predetermined distance from each other. The acoustic coupling medium 244 may be an acoustic coupling fluid, preferably an acoustically homogeneous material in conformal contact with both acoustic lens 243 and base 206 of container 200. Preferably, acoustic coupling medium 244 is substantially free of material having different acoustic properties than the fluid medium itself. Furthermore, it is preferred that acoustic coupling medium 244 includes a material having acoustic properties, e.g., acoustic impedance, that facilitate the transmission of acoustic radiation from acoustic lens 243 to bottom surface 206 and into container 200 without significant attenuation in acoustic pressure and intensity. For example, as illustrated in FIG. 2A, acoustic coupling medium 244 may couple container 200 to acoustic lens 243, such that an acoustic wave generated by acoustic radiation generator 241 is directed by the lens 243 into the acoustic coupling medium 244 which then transmits the acoustic wave into the container 200. The acoustic wave preferably focuses to a focal point 208 near the surface 204 of fluid 203 in order to eject at least one droplet 209 of the fluid. For further details of exemplary acoustic ejection systems and uses thereof, see U.S. Patent Nos. 6,938,995 and 7,900,505.

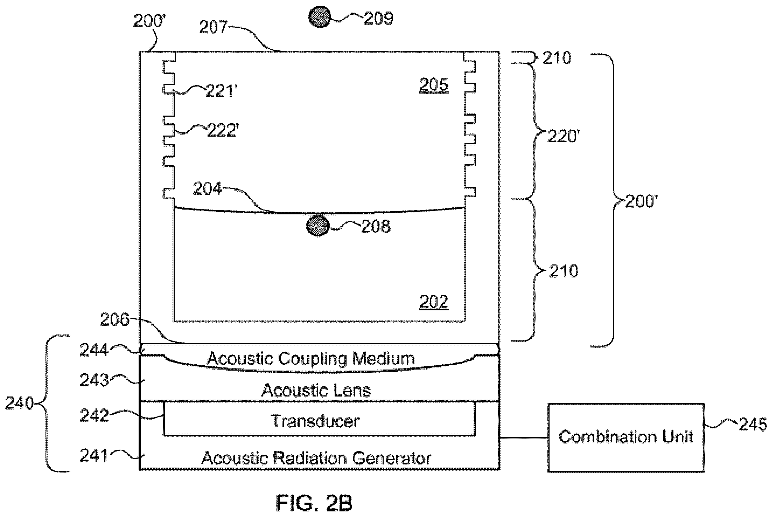

Note that many configurations and arrangements other than that illustrated in FIG. 2A suitably may be used. For example, FIG. 2B illustrates an embodiment in which an alternative container 200' is coupled to ejector 240 in a manner analogous to that illustrated in FIG. 2A. Alternative sidewall 201' of container 200' includes an alternative change in texture, e.g., plurality of alternative grooves 221', that are defined in the inner surface of container 200' within region 220'. Grooves 221' define regions 222' that are raised relative to grooves 221', and accordingly define an identification mark such as a barcode. In yet other embodiments (not illustrated), an identification mark suitably may be embedded on both sides of the inner and outer surface of a container.

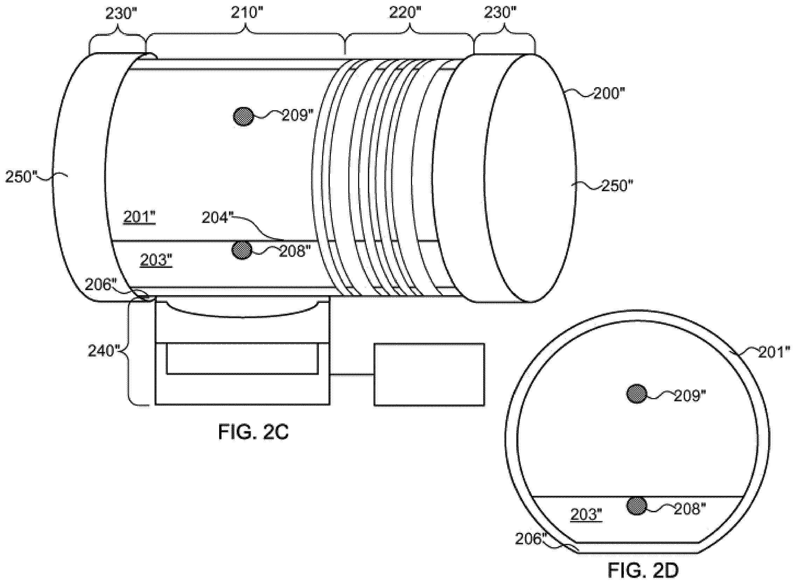

FIGS. 2C-2D illustrate yet another embodiment, in which alternative container 200" is in a substantially horizontal orientation and configured for use with acoustic generator 240, which may be configured analogously to that described with reference to FIG. 2A but suitably adapted for use with horizontal container 200". In the illustrated embodiment, sample container 200" includes tubular sidewall 201", which may be substantially cylindrical, and that includes a first region 210" for performing acoustic ejection of fluid 203" having an upper surface 204", a second region 220" having embedded therein an identification mark such as described herein, and third regions 230" configured to receive caps 250". In the embodiment illustrated in FIGS. 2C-2D, the identification mark includes a change in texture, e.g., plurality of grooves, defined within the exterior surface of container 200" so as to define a plurality of ridges that are raised relative to the grooves, in a manner analogous to that illustrated in FIG. 2 A. Alternatively, the identification mark may include a change in texture, e.g., plurality of grooves, defined within the interior surface of container 200" in a manner analogous to that illustrated in FIG. 2B, or as yet another alternative may include grooves defined within both the interior and exterior surfaces of container 200". Preferably, the identification mark, e.g., defined by the grooves and ridges, is machine readable, and may have any suitable geometric pattern.

In the embodiment illustrated in FIGS. 2C-2D, container 200" is generally cylindrical, although a portion of sidewall 201" in region 210", and optionally also in regions 220" and 230", is substantially flat along the major axis of sidewall 201". For example, FIG. 2D illustrates a cross-section of container 200" within region 210", in which it may be seen that bottom portion 206" is substantially flat, is oriented substantially perpendicular to the major axis of sidewall 201", and is configured to receive an acoustic wave and to transmit the acoustic wave to fluid 203" disposed within region 210". The material and thickness of bottom portion 206" should be such that acoustic radiation may be transmitted therethrough and into fluid 203" contained within container 200". For example, container 200" may be coupled to an acoustic ejector 240" that may be configured analogously to ejector 240 described above with reference to FIG. 2A, and adapted for use with container 200". For further details on containers and acoustic ejectors for use in a horizontal configuration, see U.S. Publication No. 2013/0109042, the entire contents of which are incorporated by reference herein for all purposes.

An exemplary method and system for preparing a sample container now will be described, although it should be understood that other methods and systems suitably may be used.

FIG. 3 A illustrates an exemplary method 301 for preparing a sample container having an identification mark embedded therein, according to an embodiment of the present invention. Method 301 includes providing a tubular sidewall defining interior and exterior surfaces of a sample container (302). Preferably, the tubular sidewall has first and second regions that are disposed relative to one another along the major axis of the tubular sidewall. Optionally, the tubular sidewall further includes a third region that is disposed along the major axis of the sidewall relative to the first and second regions, and that is configured to receive a cap.

Preferably, the material used to provide the sidewall is compatible with the fluids intended to be contained therein. Thus, if it is intended that the sidewall contain an organic solvent such as acetonitrile, polymers that dissolve or swell in acetonitrile would be unsuitable for use in forming the sidewall. Similarly, sidewalls intended to contain dimethyl sulfoxide (DMSO) preferably are compatible with DMSO. For water-based fluids, a number of materials are suitable for the construction of sidewalls and include, but are not limited to, ceramics such as silicon oxide and aluminum oxide, metals such as stainless steel and platinum, and polymers such as polyester and polytetrafluoroethylene. For fluids that are photosensitive, the sidewall may be constructed from an optically opaque material that has sufficient acoustic transparency for substantially unimpaired functioning of the device. The sidewall may be prepared using any suitable technique, such as molding, machining, casting, extruding, or three-dimensional printing. In some embodiments, such as those illustrated in FIGS. 2A-2B, the sidewall may be integrally formed with the bottom of the container. The bottom of the container may, for example, be substantially perpendicular to the major axis of the sidewall, and suitably may be configured to transmit an acoustic wave therethrough and into a fluid disposed within the second region. In other embodiments, such as illustrated in FIGS. 2C-2D, one or more caps suitably may be applied to the sidewall at a later time so as to form a partially or fully closed container that encloses fluid. As noted above, the sidewall may have any suitable cross-section. In some embodiments, the sidewall is generally cylindrical. For example, the sidewall may have a cross-section that is generally circular, and that optionally includes one or more flat portions so that the container suitably may be used in a horizontal configuration for acoustic ejection; cross-sections that have a circular portion and a flat portion may be considered to be "generally circular." Such a flat portion suitably may be configured to transmit an acoustic wave therethrough and into a fluid.

An identification mark then is embedded within the tubular sidewall at a plurality of sectors, each having a width, about the tubular sidewall within the first region (303). The identification mark preferably is machine readable by a reader viewing any arbitrary one or more of the sectors. In some embodiments, the identification mark is embedded by forming a machine-readable change in the texture of the tubular sidewall. In some embodiments, embedding the identification mark includes removing portions of the sidewall so as to define a change in texture, e.g., plurality of grooves in the sidewall, where the plurality of grooves define the identification mark, e.g., define a barcode. The change in texture, e.g., grooves, may be formed, for example, by removing small amounts of material from the container or by otherwise introducing machine-readable changes in the texture of the container's surface in accordance with a geometrical pattern. Such change in texture, e.g., grooves, may be formed using any suitable method, including but not limited to laser scribing, chemical etching, discoloring the surface such as with heating, burning, or radiation, or transferring adherent materials which may have the same color as the container or may have one or more different colors than the container. The change in texture, e.g., grooves, suitably may be defined in the inner surface of the container, or in the outer surface of the container, or both. In some embodiments, the barcode is one-dimensional, and the grooves extend substantially perpendicularly to the major axis of the tubular sidewall, e.g., as illustrated in FIG. 1 A. In other embodiments, the barcode is two-dimensional, and the grooves define a two-dimensional geometric pattern, such as described above with reference to FIG. 1C. In yet other embodiments, the identification mark is any other suitable geometric pattern that may be machine readable so as to identify the container.

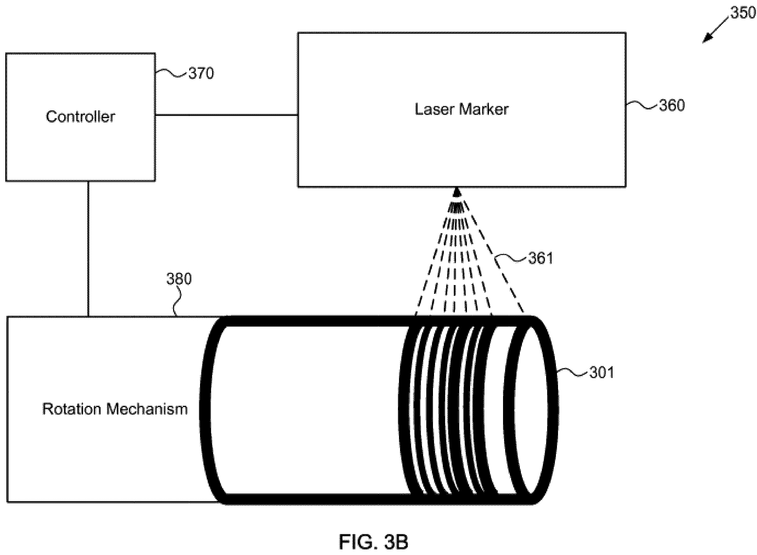

FIG. 3B is a simplified diagram of an exemplary system 350 for embedding an identification mark within a sample container, according to an embodiment of the present invention. The illustrated system 350 includes laser marker 360, controller 370, and rotation mechanism 380, although it should be understood that other system configurations suitably may be used. Laser marker 360 is configured to irradiate sidewall 301 with one or more laser beams 361 that are configured to remove material from sidewall 301 in accordance with instructions from controller 370, e.g., to ablate portions of sidewall 301 so as to define a change in texture, e.g., grooves, having an appropriate geometric pattern. Controller 370 is configured to receive user instructions regarding the type of identification mark to be embedded within sidewall 301, e.g., the type of barcode, and suitably to instruct laser marker 360 to implement that type of identification mark. Controller 370 further may be configured to cause rotation mechanism 380, to which sidewall 301 may be coupled, to rotate sidewall 301 so as to remove material from the interior or exterior surface, or both, of sidewall 301 within multiple sectors about sidewall 301 and thus so as to define a change in texture, e.g., grooves, within such sectors. As noted above with reference to FIG. 1 A, such sectors may be contiguous with one another, or, as noted above with reference to FIG. IB, there may be discontinuities between one or more of such sectors. Such discontinuities may be formed by interrupting laser beams 361 at suitable times during rotation of sidewall 301. In some embodiments, controller 370 suitably controls laser marker 360 so as to dispose the identification mark only within a certain region of sidewall 301, e.g., only within a region that is spaced apart from a region in which acoustic energy traversal is to be used for droplet ejection, so as to inhibit interaction between the ejection acoustic wave and the identification mark.

Suitable laser markers and controllers that may be adapted for use in embedding identification marks within a sidewall are commercially available, such as the 3 -Axis YV04Laser Marker, MD-V9900A Series available from Keyence Corporation (Osaka, Japan). However, it should be understood that any suitable method for defining identification marks, e.g., defining a change in texture, e.g., defining grooves, within a sidewall may be used, and that such methods may, but need not necessarily, include removing material from the sidewall. For example, material may be added to the sidewall so as to define a change in texture, e.g., ridges having grooves therebetween, e.g., the ridges may be formed using laminating or three-dimensional printing, or even conventional printing methods for curved surfaces. Or, for example, the sidewall may be fabricated with the change in texture, e.g., grooves, integrated therein, so as to obviate the need for an additional step of material removal, e.g., the sidewall and grooves may be formed using molding or three-dimensional printing. It should be understood that methods other than laser marking suitably may be used to embed an identification mark within a container.

As noted above, embedded identification marks preferably are machine readable, and indeed may not be human readable. FIGS. 4A-4C are simplified diagrams showing sample containers having identification marks embedded therein together with a reader for reading the identification marks, according to some embodiments of the present invention. FIG. 4 A illustrates an embodiment in which reader 490 scans one or more sectors of container 400 at an arbitrary rotational position within region 420 and finds an identification mark, which optionally may include an error correction code (ECC). Note that the identification mark may, for example, be disposed on the outer surface of container 400, in which case reader 490 may read the outside of container 400. In such embodiments, container 400 suitably may be either opaque or may be at least partially transparent to the wavelength to be used to read the identification mark; such wavelength may be within the human-visible range, or may be outside of the human-visible range, e.g., may include a wavelength in the ultraviolet, near-infrared, or far-infrared range. Alternatively, the identification mark may, for example, be disposed on the inner surface of container 400, in which case reader 490 may read the inside of container 400. In such embodiments, container 400 preferably is at least partially transparent. As yet another alternative, the identification mark may, for example, be disposed on both the inner and outer surfaces of container 400, in which case reader 490 may read both the inside and outside of container 400. In such embodiments, container 400 preferably is at least partially transparent.

FIG. 4B illustrates an alternative embodiment in which alternative reader 490' scans two arbitrary sectors of container 400 within region 420, in which one sector is at least partially visible, as in FIG. 4A, and the other is at least partially obscured by a discontinuity, e.g., by supplementary label 421 affixed to the exterior surface of the container. The identification mark preferably is machine readable by reader 490' viewing the label and by viewing any arbitrary one or more of the sectors that is not obscured by the label. The label and the one or more of the sectors may be separated from one another by about 10% or less of a circumference of the exterior surface of the container, e.g., about 5% or less of a circumference of the exterior surface of the container, e.g., about 2% or less of a circumference of the exterior surface of the container. As in FIG. 4A, reader 490' may read the inside and/or outside surfaces of container 400', and container 400' may be at least partially transparent as appropriate, so as to facilitate reading the inside surface of the container. Note that reader 490' may include a single reader configured to scan multiple sectors or portions thereof, or alternatively may include multiple readers, each configured to scan a corresponding sector or portion thereof, e.g., may include two readers.

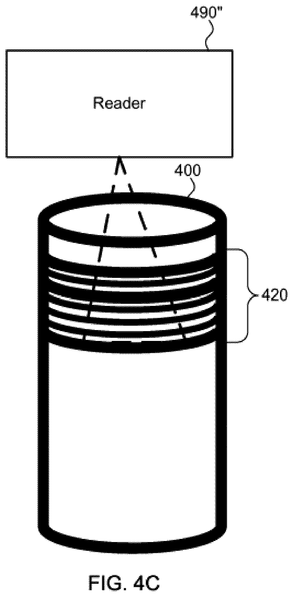

FIG. 4C illustrates another alternative embodiment in which alternative reader 490" performs a glancing-angle scan of one or more sectors of container 400 at an arbitrary rotational position within region 420 and finds the identification mark and optional ECC. As in FIG. 4A, reader 490" may read the inside and/or outside surfaces of container 400', and container 400' may be at least partially transparent as appropriate, so as to facilitate reading the inside surface of the container. Additionally, as in FIG. 4A, reader 490" may include a single reader configured to scan one sector or a portion thereof, or as in FIG. 4B, may include a single reader configured to read multiple sectors or portions thereof or may include multiple readers, each configured to scan a corresponding sector or portion thereof, e.g., two readers.

Suitable readers that may be adapted for use in reading embedding identification marks within a container are commercially available, such as the High Performance 2D Code Reader, SR-D100 Series available from Keyence Corporation (Osaka, Japan). According to the manufacturer, the SR-D100 reader has an ultra-high resolution mode in which it may read bar code features, also referred to as cells, having a size of 25 µm or more, with a focal distance of 40 mm. From a simplified point of view, the SR-D100 reader includes a camera with macro lens in front of it. If the camera's field of view is curved or tilted, as may be the case when viewing embedded identification marks from direct perspective such as respectively illustrated in FIGS. 4A-4B or from a glancing-angle perspective such as illustrated in FIG. 4C, distortions in the view may be compensated for by stopping down the camera, which may increase the exposure time.

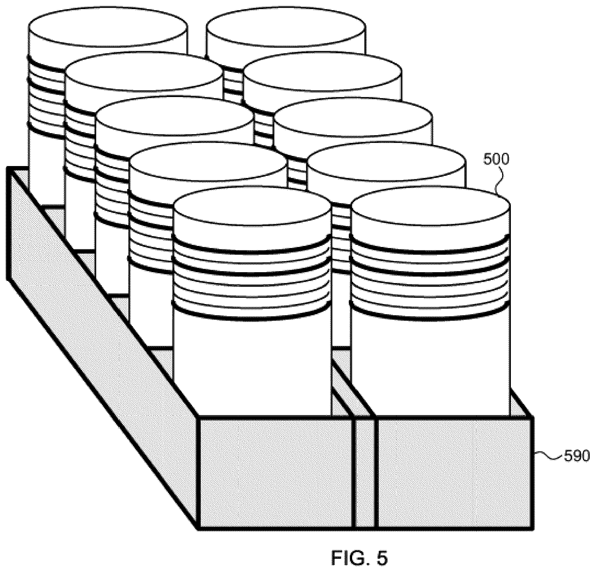

In one illustrative embodiment, a 15 digit code is expressed as a two-dimensional bar code with 15x15 cells and a 25 µm cell size, corresponding to the resolution of the SR-D100HA model reader, yielding an identification mark that is approximately a 0.375 mm x 0.375 mm square. If that code is printed on a tubular sidewall having a 3.5 mm outer diameter that is on the optical axis of the reader, the difference in focus distance is approximately 10 µm from one edge of the identification mark to the center. If the tubular sidewall is rotated such that the optical axis is on the edge of the identification mark, the other edge is only 41 µm further away from the reader, which may be less compared to the offset caused by the tilt angle needed to be able to read the code off of sidewalls in a carrier, e.g., such as the sidewalls of containers 500 disposed within carrier 590 illustrated in FIG. 5 and described in greater detail below. If the edge of the identification mark is located 1 mm from the top of the sidewall and the reader is reading codes along the diagonals of the carrier, this leaves approximately 2.8 mm of distance between near walls of adjacent tubes which corresponds to approximately 20 degrees. Reading through the far wall, the corresponding tilt angle is about half of that.

To calculate the minimum amount of tilt at which a reader may be able to read an identification mark, first the Numerical Aperture (NA) needed to obtain a diffraction-limited spot size that correlates with the cell size is calculated. Then it is determined whether the tilt must be increased to inhibit clipping the NA. Continuing with the illustrative embodiment above, with a 25 µm minimum cell size, assume that the objective has a diffraction limit of 5 µm. That means the Numerical Aperture of the objective must be at least 0.16 (NA = 1.22 λ/d, where λ=650 nm and d=5 µm), corresponding to an F number of 3.1. That corresponds to a half angle of the cone of light of asin(0.16) which is approximately 10 degrees. Thus, clearing the mechanical obstruction also guarantees that we can get diffraction limited imaging. The worst case focal shift due to the 20 degree tilt will be approximately 0.13 mm. The SR-D100HA has a field of view of 5.5x3.5 mm which matches the aspect ratio of a 752x480 pixel sensor with 6 µm pixels (from Aptina Imaging Corporation, San Jose, California), yielding a magnification of 0.8. To calculate the expected depth of field for the worst case F number of 3.1 , these numbers may be used in the standard formula for depth of field for close up imaging, DOF ≈ ^{2Fc(*m* + 1)}/*m* where c = diameter of circle of confusion (e.g., 12.5 µm) and m is the magnification, yielding a depth of field of approximately 0.2 mm. Accordingly, it appears that for relatively small identification marks, tilt and curvature substantially are not anticipated to affect the potential for reading the identification mark. It should be appreciated that the above equations and calculations are merely exemplary, and should not be construed as limiting in any way.

FIG. 5 is a simplified diagram showing multiple single-reservoir containers 500 having identification marks embedded therein, held as a collection in rack 590. Preferably, each container has an arbitrary rotational orientation with each presenting complete, readable identification information to a reading device according to one embodiment of the present invention. In some embodiments, the identification marks substantially are configured so as not to be obscured by rack 590, e.g., are disposed at a spaced distance from portions of containers 500 that are expected to be disposed within, and thus obscured by, rack 590. For example, as noted above with reference to FIGS. 1A-1C, the identification marks may be disposed only within regions 120, 120', or 120". Alternatively, for embodiments in which containers 500 are to be read using glancing-angle scanning such as illustrated in FIG. 4C, the identification marks suitably may be embedded within regions that are disposed within rack 590, because the glancing-angle scan may read the identification marks from a perspective at which rack 590 does not obscure the identification marks.

Rack 590 may have any suitable configuration. For example, rack 590 may have an fully open bottom, permitting the bottoms of containers 500 to be fully exposed, or alternatively may have a partially open bottom, permitting the bottoms of containers to be partially exposed, or alternatively may have a closed bottom. For embodiments in which containers 500 will be used in a vertical orientation with an acoustic ejector such as described above with reference to FIG. 2A, rack 590 preferably has a fully or partially open bottom so as to facilitate transmission of acoustic energy from the acoustic ejector into containers 500. So as to facilitate handling of multiple containers, containers 500 preferably are substantially acoustically indistinguishable from one another, and uniquely identifiable from one another by machine reading identification marks respectively embedded therein.

Additionally, rack 590 further may be configured so as to receive any suitable number and arrangement of containers 500. For example, commercially available racks may accommodate an array of 96, 384, 1536, or 3456 containers, although racks accommodating more or fewer containers suitably may be used. Manufacturers of suitable racks include Thermo Fisher Scientific (Hudson, New Hampshire) and Brooks Automation, Inc. (Chelmsford, Massachusetts). In addition, to reduce the amount of movement and time needed to align the acoustic ejector with each container during operation, it is preferable that the center of each container be located not more than about 1 centimeter, e.g., not more than about 1.5 millimeters, e.g., not more than about 1 millimeter, e.g., not more than about 0.5 millimeter, from a neighboring container center. These dimensions tend to limit the size of the containers to a maximum volume. For example, containers 500 may be constructed to contain no more than about 1 mL, e.g., no more than about 200 µL, e.g., no more than about 10 µL, e.g., no more than about 1 µL of fluid. Note that because of their relatively small size, containers of such volumes, e.g., volumes of 10 or less, or 1 µL, or less, may not suitably be labeled using conventional labels, e.g., paper and adhesive based labels. Such conventional containers therefore may be identified by placing them into a known position within a rack that is conventionally labeled. However, following their use at that position, and removal from that position, the containers may not suitably be reused because they are no longer identifiable relative to one another. Accordingly, such containers conventionally then are discarded. In comparison, the present containers having identifying marks embedded therein suitably may be reused any appropriate number of times, e.g., may be removed from rack 590, suitably stored, and retrieved for further use any appropriate number of times. As such, the present containers having identifying marks embedded therein may facilitate repeated uses of fluids therein that otherwise may have been discarded. Additionally, even if it is practicable to apply a paper-based label to a conventional container, such a label may not be as durable as are the present identification marks; additionally, such a label may interfere with acoustic ejection from the container, particularly if the label is applied to the bottom of the container.

When rack 590 is configured to store an array of containers 500, such as illustrated in FIG. 5, each container may be individually, efficiently, and systematically addressed. Although any type of array may be employed, arrays that include parallel rows of evenly spaced containers are preferred. Typically, though not necessarily, each row contains the same number of containers. For example, rectilinear arrays that include X rows and Y columns of containers may be used, wherein X and Y are each at least 2. In some instances, X may be greater than, equal to, or less than Y. In addition, nonrectilinear arrays as well as other geometries may be employed. For example, hexagonal, spiral and other types of arrays may be used as well. In some instances, rack 590 may be configured to accommodate an irregular pattern of containers.

It should be apparent that the present containers with identification marks therein suitably may be used in any appropriate application. For example, although the present containers have been described as being configured for compatibility with acoustic ejection, it should be understood that the containers alternatively may be configured for compatibility with any other suitable fluid storage or analysis technique, including micropipetting, pin spotting, inkjet printing, and the like. Indeed, the present containers with identification marks therein suitably may be used to store any item or material.

Additionally, as discussed above, there is a need for sample containers that can simplify the full life cycle of processing biological samples (e.g., collecting, transferring, preserving, and/or analyzing biological samples) by using acoustic ejection and/or acoustic analysis, and that include multiple reservoirs that respectively may be configured to store multiple fluids. In some embodiments, the multiple reservoirs respectively are configured to store multiple different concentrations of a particular fluid.

For example, because acoustics allows for smaller reservoirs as well as the volumes extracted from them, having multiple reservoirs defined within a generally cylindrical container of conventional size is both possible and useful. For example, as provided herein, a container configured for use within a conventional microplate footprint, e.g., a microplate having 96, 385, 1536, or 3456 wells, such as a 1536 low dead-volume (LDV) microplate available from Labcyte Inc. (Sunnyvale, California) or any other suitable microplate or rack, and configured for storage and retrieval using conventional robotic systems, suitably may be adapted so as to include multiple reservoirs therein. Accordingly, the number of samples that suitably may be stored, retrieved, and analyzed or used in acoustic ejection using conventional systems may be dramatically increased, and the efficiency of such storage, retrieval, analysis, and use also may be dramatically increased. Additionally, it should be noted that other, non-acoustic liquid handling procedures also suitably may be used for extracting samples from the present reservoirs, such as with a pipette, capillary, pin tool, or other method, e.g., based upon the insertion of a solid transfer device into a reservoir to extract a volume of the sample for transfer to another location.

Note that if an advantage of conventional tubes is the flexibility they provide in being selectable and separable from neighboring tubes, then it may seem counterintuitive instead to configure a tube so as to include multiple reservoirs therein, that may be inseparable from one another. However, one desirable commercial use of fluids is the ability to relatively quickly and conveniently construct dose-response curves, e.g., where the fluid contains a compound such as a drug. In an exemplary embodiment of the present invention, storing multiple concentrations of a fluid within respective reservoirs within the same tube may speed a process of constructing the same assay but with of many different concentrations of the fluid, e.g., compound or drug, without the need for the separate retrieval of multiple, separable tubes. Additionally, because dose-response curves suitably may be constructed with relatively small amounts of the same compound or drug using acoustics, the consumption of any given concentration of the compound may be relatively small. In some embodiments, placing multiple concentrations of the compound in the same tube may simplify retrieval, because retrieval and preparation of the tube suitably may supply multiple concentrations, e.g., 4 concentrations. Additionally, such a tube configuration may make better use of storage space as it provide some multiple of the concentrations, e.g., 4X the number of concentrations, in the same space relative to what may be achieved using otherwise similar tubes having only a single reservoir therein.

Additionally, the present tubes optionally may be stored in collections with one another, e.g., stacked upon one another. For example, in some embodiments, the heights of the present tubes may be larger than required to store the fluid therein, which may facilitate stacking. For example, the present tubes may be configured to as to receive caps, and the top of the cap on one tube suitably may be configured so as to engage with the bottom of another tube, e.g., to interlock with the bottom of another tube. In some embodiments, the tube with which the present tube may be interlocked also may have multiple reservoirs therein, thus enabling further multiplication of the number of fluids that may be retrieved using a single act of retrieval. In one illustrative embodiment, two stacked tubes each may include four reservoirs defined therein, and each such reservoir may include a different concentration of a fluid. Accordingly, retrieving such a stack may retrieve eight fluid concentrations at once, thus facilitating the ready preparation of an 8-point dose response based on a single retrieval. Note that any suitable number and types of tubes may be mixed and matched with one another. For example, a given stack may include any desired number of tubes that include multiple reservoirs therein, e.g., that include four reservoirs therein, may include any desired number of tubes that contain a different number of reservoirs therein, e.g., that include two reservoirs therein, and may include any desired number of tubes that include only a single reservoir therein. For example, some existing storage systems originally may have been designed to accommodate an array of large tubes, but suitably may be used instead to permit storage of an array of stacks each of a desired number of the present tubes with caps, e.g., stacks of two or more, or three or more, or four or more, or five or more, or even ten or more of the present tubes, wherein one or more of such tubes may include a plurality of reservoirs, e.g., four reservoirs.

Note that any suitable number of reservoirs may be provided within the present sample tubes, and that any suitable one or more fluids may be stored within one or more of such reservoirs. For example, as noted above, such fluids may have various concentrations of a compound, e.g., a drug. The dilution sequence may include any desirable range of concentrations. For example, in some embodiments, the various concentrations may be provided in half-log steps. However, it should be appreciated that the concentrations may be provided in 10X steps, and may be be used for 16 point, half-log steps by using 1 drop as well as 3 drops to fill in the intermediate half-log steps between the full log step of concentration in the tubes.

Accordingly, the present tubes (containers) having multiple reservoirs therein suitably may facilitate the use of existing tube storage equipment, which originally may have been designed for use with larger tubes, for storage and retrieval of the present tubes, and thus may increase storage efficiency and utility for dose response construction, among other potential applications.

FIGS. 6A-6B are simplified diagrams showing a single retrievable sample container of roughly cylindrical shape having more than one reservoir where the samples are isolated from each other, optionally including an acoustically distinguishable difference in thickness in the bottoms of reservoirs in the container, according to some embodiments of the present invention. These diagrams are merely examples, as are the other diagrams herein, which should not unduly limit the scope of the claims. One of ordinary skill in the art would recognize many variations, alternatives, and modifications.

FIG. 6A illustrates an exemplary container 600 that has a generally cylindrical shape, which also may be referred to herein as a "roughly" cylindrical shape, e.g., has a cross section that is generally circular. However, it should be appreciated that the cross-section of container 600 suitably may have other geometries, e.g., may have a cross-section that is generally triangular, or that is generally rectangular, or that is generally square, or that is generally pentagonal, or that is generally hexagonal, or that has any suitable number of sides, and indeed may have any regular or irregular shape. Additionally, the cross-section of container 600 may vary along major axis 604. For example, container 600 may be tapered, e.g., such that the cross-section at one end of container 600 may be smaller or larger than the cross-section at the other end of container 600. For example, if container 600 is formed using a mold, then such a taper may facilitate removal of container 600 from the mold.

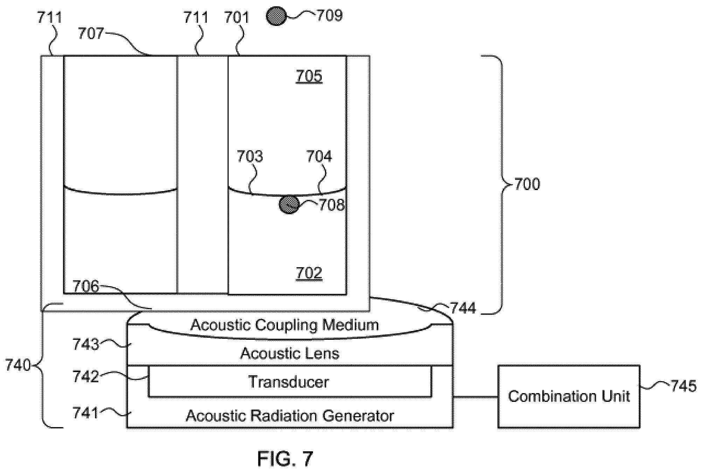

A plurality of reservoirs 601 are defined within container 600, and extend along at least a portion of container 600 in a direction parallel to major axis 604. Preferably, reservoirs 601 may have has a cross section that is generally circular. However, it should be appreciated that the cross-section of reservoirs 601 suitably may have other geometries, e.g., may have a cross-section that is generally triangular, or that is generally rectangular, or that is generally square, or that is generally pentagonal, or that is generally hexagonal, or that has any suitable number of sides, and indeed may have any regular or irregular shape. Additionally, the cross-section of one or more of reservoirs 601 may vary along major axis 604. For example, one or more of reservoirs 601 may be tapered, e.g., such that the cross-section at one end of reservoir 601 may be smaller or larger than the cross- section at the other end of that reservoir. For example, if reservoirs 601 are formed using a mold, then such a taper may facilitate removal of container 600 and reservoirs 601 from the mold. It should be understood that container 600 may include any suitable number of reservoirs 601, e.g., two or more, or three or more, or four or more, or five or more, or six or more, or ten or more, reservoirs 601. Additionally, it should be understood that each of such reservoirs 601 within container 600 may have a shape and size that is selected independently of one or more other of such reservoirs. Preferably, each of the reservoirs defined within the container 600 may be designed for acoustic ejection. Additionally, each of reservoirs 601 is configured so as to be distinguishable acoustically from one another, so as to facilitate unique identification of the reservoirs within container 600. For example, as illustrated in FIG. 6B, each of reservoirs 601 is configured such that the bottom of container 601 has a different thickness beneath the respective reservoir. For example, the bottom of container 600 may have a thickness hi beneath a first reservoir 601, and may have a thickness h2 beneath a second reservoir 601. Such different thicknesses is used so as to identify the individual reservoirs 601 within container 600, e.g., so as to identify the concentration of fluid within such reservoirs 601, in a manner described in greater detail below with reference to FIG. 7.

Referring again to FIG. 6A, reservoirs 601 each respectively defines a volume configured to receive a fluid, e.g., a fluid into which acoustic energy may be transmitted so as to eject a droplet of fluid. In exemplary embodiments, container 600 has a height of 10 cm or less, or 6 cm or less, or 2 cm or less, or 1 cm or less, or 1 mm or less, or 100 µm or less. In exemplary embodiments, container 600 has a diameter of 5 cm or less, or 2 cm or less, or 1 cm or less, or 0.5 cm or less, or 1 mm or less. In exemplary embodiments, each of reservoirs 601 independently may have a diameter of 1 cm or less, or 0.5 cm or less, or 1 mm or less, or 100 µm or less.

In some embodiments, one or more of the reservoirs has a volume that is different than a volume of at least one other of the reservoirs. For example, the reservoirs respectively may be configured to hold different volumes of fluid than one another. Illustratively, the difference in volume can be significant, e.g., one of the reservoirs can have a volume that is at least 10% larger than another of the reservoirs, e.g., can have a volume that is at least 50% larger than another of the reservoirs, e.g., can have a volume that is at least 100% larger than another of the reservoirs, e.g., can have a volume that is at least 400% larger than another of the reservoirs.

Preferably, the material used to provide container 600 is compatible with the fluid or fluids intended respectively to be contained within reservoirs 601. Thus, if it is intended that the reservoirs 601 contain an organic solvent such as acetonitrile, polymers that dissolve or swell in acetonitrile would be unsuitable for use in forming container 600. Similarly, reservoirs intended to contain dimethyl sulfoxide (DMSO) preferably are compatible with DMSO. For water-based fluids, a number of materials are suitable for the construction of containers and include, but are not limited to, ceramics such as silicon oxide and aluminum oxide, metals such as stainless steel and platinum, and polymers such as polyester and polytetrafluoroethylene. For fluids that are photosensitive, the container 600 may be constructed from an optically opaque material that has sufficient acoustic transparency for substantially unimpaired functioning of the device. The container 600 and reservoirs 601 therein may be prepared using any suitable technique, such as molding, machining, casting, extruding, or three-dimensional printing. As mentioned above, a cap suitably may be applied to the container 600 at a later time so as to form a closed container that encloses fluid.

FIG. 7 is a simplified diagram showing a retrievable sample container of roughly cylindrical shape having more than one reservoir where the samples are isolated from each other, in conjunction with an acoustic ejection system, according to some embodiments of the present invention.

In the embodiment illustrated in FIG. 7, container 700 is preferably axially symmetrical, e.g., cylindrical, having a plurality of sidewalls 711 extending upward from container base 706, defining a plurality of reservoirs 701 within container 700, and terminating at a plurality of openings 707, although other container shapes may be used. The material and thickness of container base 706 is configured such that acoustic radiation is transmitted therethrough and into the fluids respectively contained within reservoirs 601. Additionally, as noted above with reference to FIG. 6B, the thickness of container base 706 is different beneath each of reservoirs 701 so as to facilitate identification of each of such reservoirs using the acoustic ejection system. For example, the time of flight of sound reflecting off of the bottom of reservoirs may be used to distinguish one reservoir from the other. For example, under a first reservoir the bottom 706 may have a thickness hi which may be the designed to be the thinnest, under a second reservoir the bottom 706 may have a thickness h2 which is thicker than hi, and so on around counter-clockwise (or in any other desired arrangement) under any other reservoirs within container 700. When the container is presented to the acoustic ejector 740 such as described in greater detail below, sonar measurements based on acoustic reflections from the bottoms of reservoirs 701 may be used to determine which reservoir in the container is which and allow for the transducer to center itself relative to each of the reservoirs.

In this regard, it should be appreciated that an exemplary advantage of acoustically readable identification and/or alignment marks, e.g., different thicknesses of bottom 706 beneath each reservoir, is that such marks may for example be made compatible to the same transducer used for ejection from the container and allow both sensing and actuation to be performed by the same device or by similar device external to the transfer station that would record or re-orient the container to pre-determined configuration. However, alternative embodiments include other alignment marks that may not necessarily be acoustically read and rather, are well known in the mechanical arts such as a key- way or use of optical marks (like barcodes or fiducials) to determine the rotational orientation and identity of the wells in the container. It should be appreciated that many other patterns or acoustically distinguishable features would be possible to suit the number of wells.

Preferably, but not necessarily, container base 706 is substantially flat, is oriented substantially perpendicular to the major axis of sidewall 711, and is configured to receive an acoustic wave and to transmit the acoustic wave to fluid 703 disposed within a selected one of reservoirs 701. For example, container 700 may be coupled to an acoustic ejector 740 that includes an acoustic radiation generator 741 for generating acoustic radiation and an acoustic lens 743 for focusing the acoustic radiation at a focal point within fluid 703 from which a droplet is to be ejected, near surface 704. The acoustic radiation generator contains a transducer 742, e.g., a piezoelectric element, commonly shared by an analyzer. In the illustrated embodiment, a combination unit 745 is provided that both serves as a controller and a component of an analyzer. For example, operating as a controller, the combination unit 745 may provide the piezoelectric element 742 with electrical energy that is converted into mechanical and acoustic energy. Or, for example, operating as a component of an analyzer, the combination unit may receive and analyze electrical signals from the transducer. The electrical signals may be produced as a result of the absorption and conversion of mechanical and acoustic energy by the transducer. Optionally, combination unit 745 also is configured so as to analyze acoustic echoes reflected from the bottoms of reservoirs 701 so as to identify each of such reservoirs, e.g., based on the time-of- flight of such acoustic echoes. Additionally, and independently of whether the thickness of bottom 706 varies beneath respective reservoirs 701, combination unit 745 optionally may be configured so as to find the center of each of reservoirs 701 via sonar. For example, acoustic ejector 740 may include a motion system (not specifically illustrated) configured to move acoustic radiation generator 741, acoustic lens 743, and acoustic coupling medium 744 relative to container 700, or vice versa. In embodiments in which the location of each reservoir 701 was not otherwise made available to combination unit 745, e.g., via pre-programming, combination unit 745 optionally may be configured so as to identify the center of each of reservoirs 701 using acoustic echoes from the bottoms of reservoirs 701, and to control the motion system so as to move acoustic ejector 740 relative to container 700 so as to center the point of focus of acoustic lens 743 at an appropriate point within a desired reservoir 701. Combination unit 745 further may be configured so as to control the motion system so as to subsequently move acoustic ejector 740 relative to container 700 so as to center the point of focus of acoustic lens 743 at an appropriate point within one or more different desired reservoirs 701, e.g., so as to eject droplets of fluid from each of reservoirs 701.

As shown in FIG. 7, acoustic lens 743 may include a single solid piece having a concave surface for focusing acoustic radiation, but the lens may be constructed in other ways such as known in the art. Acoustic ejector 740 thus may be adapted to generate and focus acoustic radiation so as to eject a droplet of fluid from surface 704 when acoustically coupled to container 700, and thus to fluid 703. Acoustic radiation generator 741 and lens 743 may function as a single unit controlled by a single controller, or they may be independently controlled, depending on the desired performance of the device. Typically, single ejector designs are preferred over multiple ejector designs because accuracy of droplet placement and consistency in droplet size and velocity are more easily achieved with a single ejector.

There are also a number of ways to acoustically couple the ejector 740 to each individual reservoir 701 and thus to the fluid therein. One such approach is through direct contact as is described, for example, in U.S. Pat. No. 4,308,547 to Lovelady et al, wherein a lens constructed from a hemispherical crystal having segmented electrodes is submerged in a fluid to be ejected. The aforementioned patent further discloses that the lens may be positioned at or below the surface of the fluid. However, this approach for acoustically coupling the lens to a fluid is undesirable when the ejector is used to eject different fluids in a plurality of containers or reservoirs, as repeated cleaning of the lens would be required in order to avoid cross-contamination. The cleaning process would necessarily lengthen the transition time between each droplet ejection event. In addition, in such a method, fluid would adhere to the ejector as it is removed from each container, wasting material that may be costly or rare.

Thus, one exemplary approach would be to acoustically couple the ejector to the container without contacting any portion of the ejector, e.g., lens 743, with any of the fluids to be ejected. To this end, ejector 740 suitably may be positioned in controlled and repeatable acoustic coupling with container 700 to respectively eject droplets from reservoirs 701 therein, without submerging the ejector therein.

For example, acoustic coupling may be achieved between the ejector and container 700 through indirect contact, such as illustrated in FIG. 7. For example, acoustic coupling medium 744 may be placed between ejector 740 and base 706 of container 700, with the ejector and container located at a predetermined distance from each other. The acoustic coupling medium 744 may be an acoustic coupling fluid, preferably an acoustically homogeneous material in conformal contact with both acoustic lens 743 and base 706 of container 700. Preferably, acoustic coupling medium 744 is substantially free of material having different acoustic properties than the fluid medium itself. Furthermore, it is preferred that acoustic coupling medium 744 includes a material having acoustic properties, e.g., acoustic impedance, that facilitate the transmission of acoustic radiation from acoustic lens 743 to bottom surface 706 and into container 700 without significant attenuation in acoustic pressure and intensity. For example, as illustrated in FIG. 7, acoustic coupling medium 744 may couple container 700 to acoustic lens 743, such that an acoustic wave generated by acoustic radiation generator 741 is directed by the lens 743 into the acoustic coupling medium 744 which then transmits the acoustic wave into the container 700. For example, combination unit 745 may control a motion system (not specifically illustrated) so as to center lens 743 beneath a selected one of reservoirs 701. The acoustic wave preferably focuses to a focal point 708 near the surface 704 of fluid 703 within that reservoir 701 in order to eject at least one droplet 709 of the fluid. For further details of exemplary acoustic ejection systems and uses thereof, see U.S. Patent Nos. 6,938,995 and 7,900,505.

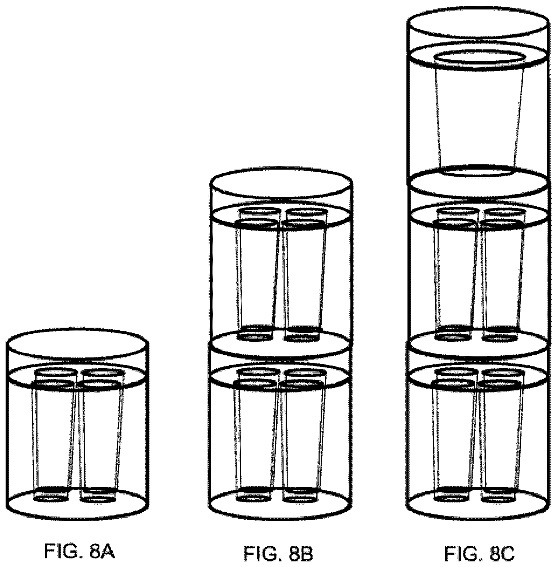

FIGS. 8A-8C illustrate exemplary configurations for storing sample containers with multiple reservoirs therein either singly or in combination with other containers, e.g., stacked with other containers, according to some embodiments of the present invention. For example, FIG. 8A illustrates an exemplary embodiment in which a sample container that includes multiple reservoirs therein, e.g., four reservoirs, may be stored separately from other containers. FIG. 8B illustrates another exemplary embodiment in which a pair of sample containers, each of which independently may include one or multiple reservoirs therein, e.g., four reservoirs each, may be stored together in a collection, e.g., may be stacked. FIG. 8C illustrates yet another exemplary embodiment in which three sample containers, each of which independently may include one or multiple reservoirs therein, e.g., four reservoirs in two of the containers, and one reservoir in another of the containers, may be stored together in a collection, e.g., may be stacked. As noted above, such collecting, e.g., stacking may facilitate efficient storage, retrieval, and analysis of fluids. For example, in the stack illustrated in FIG. 8B or the stack illustrated in FIG. 8C, the various reservoirs within the stack optionally may include different concentrations of the same fluid. Accordingly, retrieving one of such stacks suitably may retrieve such concentrations, thus facilitating rapid analysis and acoustic ejection, e.g., may facilitate rapid preparation of dose-response curves. Alternatively, one or more of the reservoirs within the containers in a given stack may store fluids that are unrelated to one another, and as such, retrieving one of such stacks suitably may retrieve such unrelated fluids. As may be seen in FIGS. 8B-8C, each container optionally may include a cap, and the cap of one container may engage with, e.g., may interlock with, the base of another container.

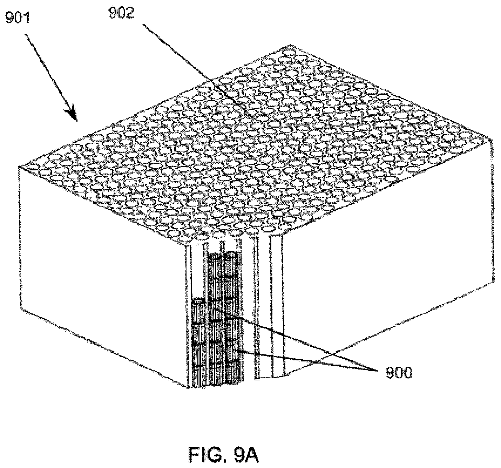

FIG. 9A shows illustrates an exemplary rack for storing combinations, e.g., stacks of roughly cylindrical containers with multiple reservoirs therein for storage and retrieval, and FIG. 9B illustrates an exemplary rack for individually holding roughly cylindrical containers with multiple reservoirs therein for analysis or acoustic ejection, according to some embodiments of the present invention. These containers may be stored sealed or lidded (capped) with single -use seals or more preferred embodiment of a multi-use lid (cap) or multi-use septum which could be opened to facilitate acoustic transfer. Preferably, but not necessarily, the containers and lids are stackable with a roughly cylindrical exterior. Also, the de-stacking, de-lidding, re-lidding and re-stacking of the containers and lids may be performed in a variety of ways known to those of skill in the art, and it is contemplated that other methods may emerge in the future that may also be used with the present invention to facilitate the retrieval, stacking, or destacking processes and preservation of materials within the container. In the exemplary embodiment illustrated in FIG. 9A, a plurality of containers 900 having multiple reservoirs therein may be stacked and stored within each of a plurality of apertures 902 defined within a rack 901. At a desired time, one or more stacks of containers 900 may be removed and the containers then may be disposed (de-stacking and de-lidding as needed) within respective spaces within rack 990 for acoustic analysis or ejection. Following such acoustic analysis or ejection, the containers then may be re-stacked and/or re-lidded as needed within an aperture defined within rack 901 for storage until a later time. See, e.g., European Patent Publication No. EP 1348485, the entire contents of which are incorporated herein by reference for all purposes, for examples of suitable racks mechanisms for manipulating stacks of containers.

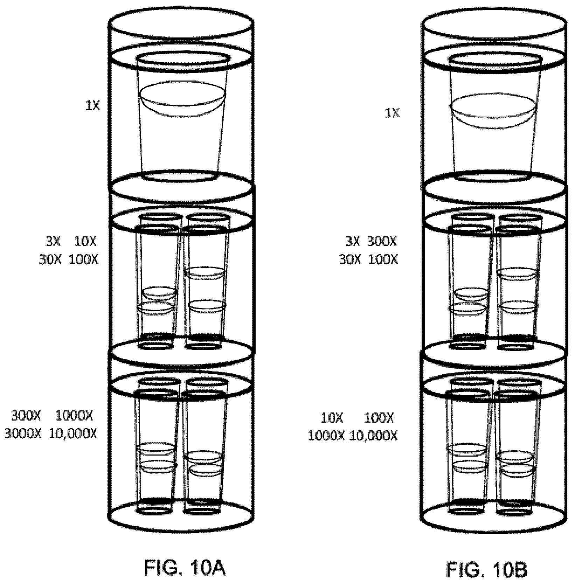

FIG. 10A-10B are simplified diagrams showing exemplary collections of multiple sample containers surface with their corresponding seals (or lids or caps) stacked as a linked assembly with roughly cylindrical exterior for storage or retrieval with different concentrations in each well, according to some embodiments of the present invention. In the embodiment illustrated in FIG. 10A, 3 sample containers are shown in a stacked configuration wherein each container has a lid and the composite exterior for the containers is roughly cylindrical. The retrieval of a stack of containers as shown in the specific example of FIG. 10A shows a mixed stack of containers with one containing a high-concentration of a compound in solution in the top, single-reservoir container designated IX, and lower concentrations of the compound in solution in each of the multi-reservoir containers wherein the concentration is designated by 3X, 10X and so on to reflect the level of dilution. This roughly corresponds to half-log dilution steps for the concentrations. With these containers, the span of concentrations is 4 logs or IX to 10,000X. It should be appreciated that these concentrations, or any other desired concentrations, suitably may be arranged in any manner within the various wells of the stack of containers. For example, different configurations are shown in FIGS. 9 A and 9B where one might be more amenable for transferring in a pre-made serial dilution (e.g., FIG. 9A) in and the other for dilution construction from one container to the other (e.g., FIG. 9B). For example, in one illustrative embodiment, 1 part of a well in one container could be mixed with 2 parts diluent in a well in the other container to construct a 1 :3 step between the two lower containers of the stack such as in the illustrative embodiment shown in FIG 10B. Retrieving a container stack with a serial dilution series such as in FIG. 10B may facilitate rapid construction of a 4-log span and half- log step assay, for example, when equal volumes of each of these was is transferred to corresponding assay wells. While illustrated with a half log step, the step in storage concentrations suitably may be a different number, larger or smaller, such as 2 or 10. In the case of 10, or full log steps, intermediate concentrations can be constructed by varying the amount transferred from the wells to fill in the half log steps. For example, if the containers hold in any order IX, 10X, 100X, and so on, corresponding to log steps in concentrations, then dose response assay with half-log steps may be constructed in a series of assay wells through the acoustic transfer of a different number of droplets. In such an example, a droplet from the IX concentration well may form the highest concentration assay well, 3 droplets of the same volume as the IX droplet but transferred from the 10X dilution may form the 2^{nd} highest concentration assay well, 1 droplet of the same volume as the previous one from the 10X dilution to the 3^{rd} highest concentration destination assay well, 3 droplets from the 100X dilution may form the next assay well, and so on. It should be appreciated that those of skill in the art could design many configurations of different concentrations or dilutions (e.g., in even log steps such as described above, or other dilutions), whose intermediate values were filled in with various volumes to construct dose response assays. It is also contemplated that the reservoirs could also be used to carry the diluent or control samples or other materials required for the construction of the assay. In one example, the samples within a given container, or within a collection, e.g., stack of containers, may be related to one another. For example, the relationship may be from fractionation (e.g., centrifugation), liquid chromatography (LC) effluent, a time-series of samples obtained from a patient, or DNA samples from close relatives, among others.

Note that in some embodiments, it may be desirable to rotate the present containers so as to arrange the reservoirs therein in the proper place for acoustic analysis or ejection. Suitable methods for such arrangements, e.g., geometric features in the container construction to readable visual methods, suitably may be adapted for use with the present containers. Additionally, as noted above, it is possible to allow identification of wells by having acoustically distinguishable features in the tube. Such features are present in the bottom of the container and designed to be detected when the tube was presented to an acoustic reader or a transfer device. One preferred embodiment would be to have one or more of the wells at measurably different thickness from the others to provide a reference for which well is which in the tube. The time of flight for sound in between the bottom of the tube and bottom of each reservoir could then be used to determine the orientation/identity of the reservoir within the tube (e.g., is it reservoir #1, #2, #3 or #4). Each of these separable multi-reservoir tubes could also be provided with an identification mark such as described in greater detail elsewhere herein, as well as in provisional patent application No. 61/927,395, filed January 14, 2014 and entitled "Sample Containers Having Identification Marks Embedded Therein and Being Adapted for Acoustic Ejections". For example, FIG. 9B illustrates an exemplary identification mark 980 disposed on each of containers 900. It should be understood that use of such identification marks is purely optional.

## Claims

1. A tubular container (700) including a plurality of reservoirs (701) defined therein,
the container including a major axis (604), and each of the reservoirs (701) extending along at least a portion of the container (700) in a direction parallel to the major axis (604), and
each of the reservoirs (701) terminating at an opening (707)
and
the container (700) is adapted to hold a fluid (703) within at least one of the reservoirs (701) of the plurality of reservoirs, wherein a bottom surface of the at least one reservoir (701) is configured to receive and transmit an acoustic wave to a focal point (708) near a surface (704) of the fluid (703) for acoustic ejection of the fluid (703); and
each reservoir comprises a bottom (706), and the bottom (706) of at least one of the reservoirs (701) comprises an acoustically distinguishable difference in thickness from the bottom (706) of at least one other of the reservoirs (701).

2. The tubular container of claim 1, wherein the reservoirs (701) are capable of isolating a plurality of fluids (703) from one another.

3. The tubular container of claim 1, being adapted for extraction of a fluid (703) disposed within at least one of the reservoirs (701) of the plurality of reservoirs using a non-acoustic liquid handling method.

4. The tubular container of claim 3, wherein the non-acoustic liquid handling method is based on the insertion of a solid transfer device into one of the reservoirs (701).

5. The generally tubular container of claim 4, wherein the solid transfer device includes a pipette, capillary, or pin tool.

6. The tubular container of claim 1, wherein one or more of the reservoirs (701) has a volume that is different than a volume of at least one other of the reservoirs (701).

7. The tubular container of claim 6, wherein one or more of the reservoirs (701) has a volume that is at least 10% larger than that of another of the reservoirs.

8. The tubular container of claim 1, the plurality of reservoirs including three or more reservoirs (701).

9. The tubular container of claim 1, a cross-section of the tubular container (700) being substantially circular.

10. The tubular container of claim 1, wherein the container (700) is tapered along the major axis (604).

11. The tubular container of any one of claims 1 to 10, further comprising a cap, wherein the cap is configured to engage with a bottom (706) of another tubular container.

12. A method comprising extracting a fluid from a tubular container (700) including a plurality of reservoirs (701) defined therein,
the container (700) including a major axis (604),
each of the reservoirs (701) extending along at least a portion of the container in a direction parallel to the major axis (604), and
each of the reservoirs (701) terminating at an opening (707) ; and the container being adapted to hold a fluid (703) within at least one of the reservoirs (701) of the plurality of reservoirs,
wherein a bottom surface (706) of the at least one reservoir (701) is configured to receive and transmit an acoustic wave to a focal point (708) near a surface (704) of the fluid (703) for acoustic ejection of the fluid (703); and
each reservoir comprises a bottom (706), and the bottom (706) of at least one of the reservoirs (701) comprises an acoustically distinguishable difference in thickness from the bottom (706) of at least one other of the reservoirs (701).

13. The method of claim 12, further comprising providing a plurality of fluids respectively disposed within the reservoirs (701) of the plurality of reservoirs, and wherein the plurality of fluids are selected from the group consisting of: different samples from the same patient, different fractions of a sample from a patient, and different concentrations of the same compound, chemical, or drug.

## Patentansprüche

1. Röhrenförmiger Behälter (700), der eine Vielzahl von darin definierten Reservoirs (701) einschließt,
wobei der Behälter eine Hauptachse (604) einschließt, und wobei sich jedes der Reservoirs (701) entlang mindestens eines Abschnitts des Behälters (700) in einer zur Hauptachse (604) parallelen Richtung erstreckt, und
wobei jedes der Reservoirs (701) an einer Öffnung (707) endet
und
der Behälter (700) dazu ausgelegt ist, innerhalb mindestens eines der Reservoirs (701) der Vielzahl von Reservoirs ein Fluid (703) zu halten,
wobei eine Bodenfläche des mindestens einen Reservoirs (701) dazu ausgebildet ist, eine Schallwelle zu empfangen und an einen Brennpunkt (708) in der Nähe einer Oberfläche (704) des Fluids (703) zu übertragen, um das Fluid (703) akustisch auszustoßen; und
wobei jedes Reservoir einen Boden (706) umfasst und der Boden (706) von mindestens einem der Reservoirs (701) einen akustisch unterscheidbaren Unterschied in der Dicke gegenüber dem Boden (706) von mindestens einem anderen der Reservoirs (701) umfasst.

2. Röhrenförmiger Behälter nach Anspruch 1, wobei die Reservoirs (701) in der Lage sind, eine Vielzahl von Fluiden (703) voneinander zu isolieren.

3. Röhrenförmiger Behälter nach Anspruch 1, der zur Extraktion eines Fluids (703), das innerhalb mindestens eines der Reservoirs (701) der Vielzahl von Reservoirs angeordnet ist, unter Verwendung eines nicht-akustischen Flüssigkeitshandhabungsverfahrens ausgelegt ist.

4. Röhrenförmiger Behälter nach Anspruch 3, wobei das nicht-akustische Flüssigkeitshandhabungsverfahren auf dem Einführen einer festen Transfervorrichtung in eines der Reservoirs (701) basiert.

5. Im Allgemeinen röhrenförmiger Behälter nach Anspruch 4, wobei die feste Transfervorrichtung eine Pipette, eine Kapillare oder ein Stiftwerkzeug einschließt.

6. Röhrenförmiger Behälter nach Anspruch 1, wobei eines oder mehrere der Reservoirs (701) ein Volumen aufweisen, das von einem Volumen mindestens eines anderen der Reservoirs (701) unterschiedlich ist.

7. Röhrenförmiger Behälter nach Anspruch 6, wobei eines oder mehrere der Reservoirs (701) ein Volumen aufweisen, das mindestens 10 % größer ist als das eines anderen der Reservoirs.

8. Röhrenförmiger Behälter nach Anspruch 1, wobei die Vielzahl von Reservoirs drei oder mehr Reservoirs (701) einschließt.

9. Röhrenförmiger Behälter nach Anspruch 1, wobei ein Querschnitt des röhrenförmigen Behälters (700) im Wesentlichen kreisförmig ist.

10. Röhrenförmiger Behälter nach Anspruch 1, wobei sich der Behälter (700) entlang der Hauptachse (604) verjüngt.

11. Röhrenförmiger Behälter nach einem der Ansprüche 1 bis 10, weiter umfassend eine Kappe, wobei die Kappe dazu ausgebildet ist, mit einem Boden (706) eines anderen röhrenförmigen Behälters in Eingriff zu kommen.

12. Verfahren, umfassend ein Extrahieren eines Fluids aus einem röhrenförmigen Behälter (700), der eine Vielzahl von darin definierten Reservoirs (701) einschließt,
wobei der Behälter (700) eine Hauptachse (604) einschließt,
wobei sich jedes der Reservoirs (701) entlang mindestens eines Abschnitts des Behälters in einer zur Hauptachse (604) parallelen Richtung erstreckt, und
wobei jedes der Reservoirs (701) an einer Öffnung (707) endet; und wobei der Behälter dazu ausgelegt ist, innerhalb mindestens eines der Reservoirs (701) der Vielzahl von Reservoirs ein Fluid (703) zu halten,
wobei eine Bodenfläche (706) des mindestens einen Reservoirs (701) dazu ausgebildet ist, eine Schallwelle zu empfangen und an einen Brennpunkt (708) in der Nähe einer Oberfläche (704) des Fluids (703) zu übertragen, um das Fluid (703) akustisch auszustoßen; und
wobei jedes Reservoir einen Boden (706) umfasst und der Boden (706) von mindestens einem der Reservoirs (701) einen akustisch unterscheidbaren Unterschied in der Dicke gegenüber dem Boden (706) von mindestens einem anderen der Reservoirs (701) umfasst.

13. Verfahren nach Anspruch 12, weiter umfassend ein Bereitstellen einer Vielzahl von Fluiden, die jeweils innerhalb der Reservoirs (701) der Vielzahl von Reservoirs angeordnet sind, und wobei die Vielzahl von Fluiden ausgewählt ist aus der Gruppe, bestehend aus: unterschiedlichen Proben von demselben Patienten, unterschiedlichen Fraktionen einer Probe von einem Patienten und unterschiedlichen Konzentrationen derselben Verbindung, Chemikalie oder desselben Arzneimittels.

## Revendications

1. Contenant (700) tubulaire incluant une pluralité de réservoirs (701) définis en son sein,
le contenant incluant un axe principal (604), et chacun des réservoirs (701) s'étendant le long d'au moins une portion du contenant (700) dans une direction parallèle à l'axe principal (604), et
chacun des réservoirs (701) se terminant au niveau d'une ouverture (707) et
le contenant (700) étant adapté pour contenir un fluide (703) au sein d'au moins l'un des réservoirs (701) de la pluralité de réservoirs, dans lequel une surface inférieure de l'au moins un réservoir (701) est configurée pour recevoir et transmettre une onde acoustique à un point focal (708) proche d'une surface (704) du fluide (703) pour l'éjection acoustique du fluide (703) ; et chaque réservoir comprend un fond (706), et le fond (706) d'au moins un des réservoirs (701) comprend une différence d'épaisseur acoustiquement distinguable du fond (706) d'au moins un autre des réservoirs (701).

2. Contenant tubulaire selon la revendication 1, dans lequel les réservoirs (701) sont aptes à isoler une pluralité de fluides (703) les uns des autres.

3. Contenant tubulaire selon la revendication 1, qui est adapté pour l'extraction d'un fluide (703) disposé au sein d'au moins l'un des réservoirs (701) de la pluralité de réservoirs en utilisant un procédé de manipulation de liquide non acoustique.

4. Contenant tubulaire selon la revendication 3, dans lequel le procédé de manipulation de liquide non acoustique est basé sur l'insertion d'un dispositif de transfert solide dans l'un des réservoirs (701).

5. Contenant généralement tubulaire selon la revendication 4, dans lequel le dispositif de transfert solide inclut une pipette, un capillaire ou un outil à aiguille.

6. Contenant tubulaire selon la revendication 1, dans lequel un ou plusieurs des réservoirs (701) présente un volume qui est différent d'un volume d'au moins un autre des réservoirs (701).

7. Contenant tubulaire selon la revendication 6, dans lequel un ou plusieurs des réservoirs (701) présente un volume qui est au moins 10 % plus grand que celui d'un autre des réservoirs.

8. Contenant tubulaire selon la revendication 1, la pluralité de réservoirs incluant trois ou plus de trois réservoirs (701).

9. Contenant tubulaire selon la revendication 1, une section transversale du contenant (700) tubulaire étant sensiblement circulaire.

10. Contenant tubulaire selon la revendication 1, dans lequel le contenant (700) est conique le long de l'axe principal (604).

11. Contenant tubulaire selon l'une quelconque des revendications 1 à 10, comprenant en outre un capuchon, dans lequel le capuchon est configuré pour venir en prise avec un fond (706) d'un autre contenant tubulaire.

12. Procédé comprenant l'extraction d'un fluide à partir d'un contenant (700) tubulaire incluant une pluralité de réservoirs (701) définis en son sein,
le contenant (700) incluant un axe principal (604),
chacun des réservoirs (701) s'étendant le long d'au moins une portion du contenant dans une direction parallèle à l'axe principal (604), et
chacun des réservoirs (701) se terminant au niveau d'une ouverture (707) ; et le contenant étant adapté pour contenir un fluide (703) au sein d'au moins un des réservoirs (701) de la pluralité de réservoirs,
dans lequel une surface inférieure (706) de l'au moins un réservoir (701) est configurée pour recevoir et transmettre une onde acoustique à un point focal (708) proche d'une surface (704) du fluide (703) pour l'éjection acoustique du fluide (703) ; et
chaque réservoir comprend un fond (706), et le fond (706) d'au moins un des réservoirs (701) comprend une différence d'épaisseur acoustiquement distinguable du fond (706) d'au moins un autre des réservoirs (701).

13. Procédé selon la revendication 12, comprenant en outre la fourniture d'une pluralité de fluides respectivement disposés au sein des réservoirs (701) de la pluralité de réservoirs, et dans lequel les fluides de la pluralité de fluides sont sélectionnés dans le groupe consistant en : différents échantillons provenant du même patient, différentes fractions d'un échantillon provenant d'un patient et différentes concentrations du même composé, produit chimique ou médicament.
